Europäisches Patentamt

European Patent Office

Office européen des brevets

(19)

(11) **EP 1 583 072 A1**

(12) **EUROPEAN PATENT APPLICATION**
published in accordance with Art. 158(3) EPC

(43) Date of publication:
**05.10.2005 Bulletin 2005/40**

(51) Int Cl.⁷: **G09G 5/00**, G06T 11/00

(21) Application number: **03717591.6**

(22) Date of filing: **15.04.2003**

(86) International application number:
**PCT/JP2003/004772**

(87) International publication number:
**WO 2004/093043 (28.10.2004 Gazette 2004/44)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(71) Applicant: **FUJITSU LIMITED
Kanagawa 211-8588 (JP)**

(72) Inventor: **NISHI, Hidefumi, c/o FUJITSU LIMITED
Kawasaki-shi, Kanagawa 211-8588 (JP)**

(74) Representative: **Fenlon, Christine Lesley
Haseltine Lake & Co.,
Imperial House,
15-19 Kingsway
London WC2B 6UD (GB)**

(54) **DRAWING DEVICE AND DISPLAY CONTROLLER**

(57)     A rendering apparatus includes a low-speed frame buffer (21) and a first temporary memory (26) and a high-speed and small capacity second temporary memory (27). The first temporary memory rendering unit (23) subjects a rendering result already stored in the first temporary memory (26) and a rendering result of rendering to be applied to the first temporary memory (26) to blend processing and stores a result of the blend processing in the first temporary memory (26). The same is true for a second temporary memory rendering unit (24) and the second temporary memory (27). A frame buffer rendering unit (22) subjects a rendering result already stored in the frame buffer (21) and rendering results stored in the first temporary memory (26) and the second temporary memory (27) to bend processing and stores a result of the blend processing in the frame buffer (21).

FIG.1

EP 1 583 072 A1

**Description**

TECHNICAL FIELD

The present invention relates to a rendering apparatus and a display control apparatus that have an alpha blending function. In a computer system, a car navigation system, and the like, rendering is applied to a frame buffer to store image data in the frame buffer and, then, data for a display screen is read out from the frame buffer and displayed on a display. Alpha blending (transparent rendering) is a function for synthesizing two images translucently.

BACKGROUND ART

In general, since a large memory space is required for a frame buffer, inexpensive and low-speed memories like a synchronous DRAM (SDRAM) are used as the frame buffer. In a rendering apparatus using such a frame buffer, an expensive and high-speed synchronous RAM (SRAM) with a small capacity is mounted on the rendering apparatus as a temporary memory. Rendering is applied to the temporary memory, and a result of the rendering is written out to the frame buffer from the temporary memory. In this rendering apparatus, since rendering is applied to the high-speed SRAM, it is possible to perform the rendering at high speed.

In such a rendering apparatus mounted with a temporary memory, it would be possible to realize further speedup of rendering if a plurality of temporary memories and a plurality of rendering units for applying rendering to the temporary memories are provided and actuated in parallel. However, in the alpha blending, it is necessary to refer to rendering results in the past. Thus, simply by providing the plurality of temporary memories and the plurality of rendering units, the rendering apparatus does not operate correctly when one rendering unit refers to a rendering result of another rendering unit.

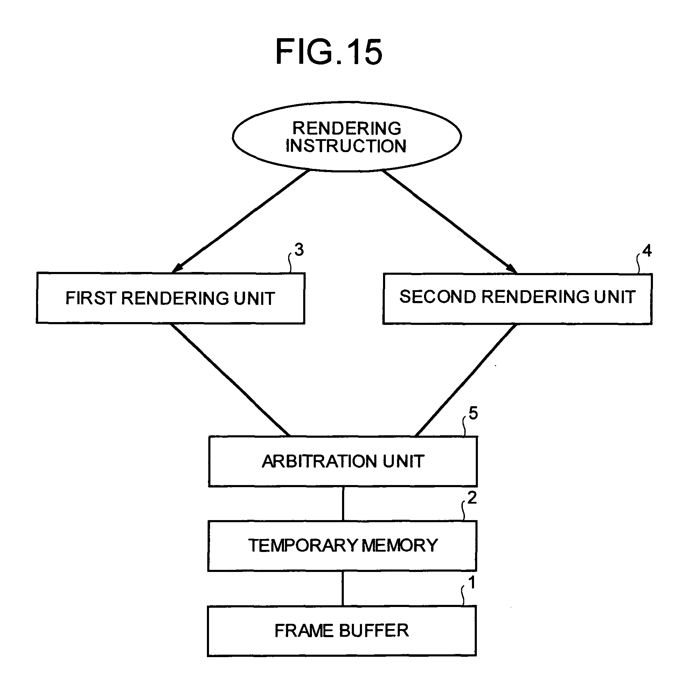

Therefore, as shown in Fig. 15, it is conceivable that one temporary memory 2 is provided for one frame buffer 1 and a plurality of rendering units 3 and 4 access the temporary memory 2. In this case, an SRAM used as the temporary memory 2 cannot process a large number of accesses simultaneously. Therefore, when the rendering units 3 and 4 access the temporary memory 2 simultaneously, it is necessary to make an access by one rendering unit 3 effective and put the other rendering unit 4 on standby until the access ends. Thus, an arbitration unit 5 is required.

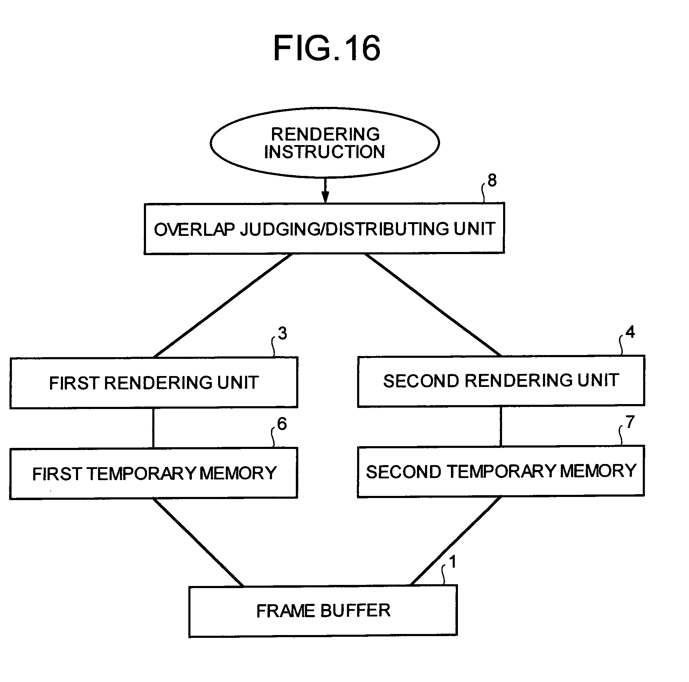

Alternatively, as shown in Fig. 16, a plurality of temporary memories 6 and 7 are provided for one frame buffer 1, rendering units 3 and 4 are connected to the temporary memories 6 and 7, respectively, and contents of the temporary memories 6 and 7 are limited to be rendered in areas that do not overlap on the frame buffer 1 at all. In this case, since it is necessary to judge that figures to be rendered do not overlap at all, an overlap judging/distributing unit 8 is required.

Besides, there are a display control apparatus that performs both the alpha blending in rendering processing and display transmission/non-transmission processing, and a display control apparatus that performs the alpha blending both in rendering processing and in display processing.

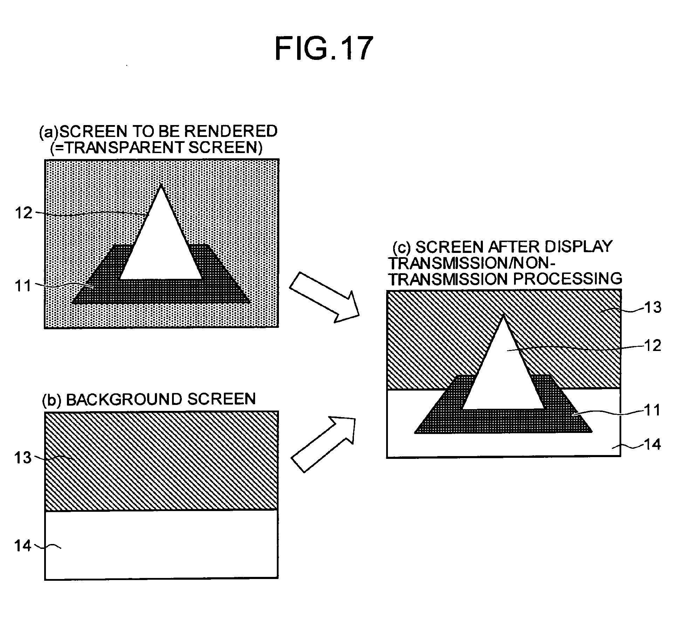

In the display transmission/non-transmission processing, data of a plurality of display screen areas are read out from a frame buffer to perform the transmission/non-transmission processing among the screens. In this case, there is a method of setting a specific color as a transparent color and transmitting or not transmitting a color depending on whether the color is the specific color (see Fig. 17). There is also a method of adding transmittance information to color information and performing the display transmission/non-transmission processing according to the transmittance.

In Fig. 17, (a) is a transparent screen subjected to transmission processing without alpha blending in rendering processing, (b) is a background screen, and (c) is a screen indicating a result of the display transmission/non-transmission processing. In a figure drawn in the screen subjected to transmission processing in Fig. 17(a), a lower half of a triangle 12 is drawn as if the triangle 12 is buried in a trapezoid 11. In Fig. 17(c), backgrounds 13 and 14 shown in Fig. 17(b) are used around the figure consisting of the trapezoid 11 and the triangle 12. However, the trapezoid 11 and the triangle 12 are not transparent.

In the alpha blending in rendering processing, the alpha blending is performed between an image rendered in the frame buffer and an image to be rendered. In the rendering, there is an initial value indicating a state in which nothing is drawn, and the rendering is performed with respect to the initial value. In general, the frame buffer is cleared with 0 in advance, and the rendering is performed with respect to a color value 0, that is, black.

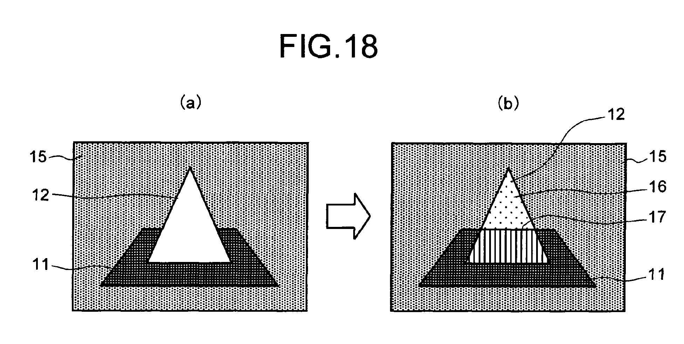

In Fig. 18(b), the triangle 12 in an image shown in Fig. 18(a) (same as Fig. 17(a)) is subjected to the alpha blending in rendering processing. In Fig. 18(a), since the triangle 12 is not transparent, parts of the trapezoid 11 and the background 15 overlapping the triangle 12 are not seen. On the other hand, in Fig. 18(b), since the triangle 12 is transparent, a color and a pattern of the background 15 are seen weakly in an upper half 16 of the triangle 12 and a color and a pattern of the trapezoid 11 are seen weakly in a lower half 17 of the triangle 12.

In the alpha blending in display processing, the blend processing is performed among a plurality of screens to which rendering processing is applied. Data of a plurality of display screen areas are read out from the frame buffer to perform the processing between blending screens and screens to be blended.

However, in the apparatus having the structure shown in Fig. 15, when the rendering units 3 and 4 access the temporary memory 2 simultaneously, the arbitration unit 5 arbitrates the accesses. As a result, the access by one rendering unit 3 is made effective and the other rendering unit 4 is put on standby. Thus, there is a problem in that speedup of rendering in the apparatus as a whole cannot be realized.

In addition, in the apparatus having the structure shown in Fig. 16, the overlap judging/distributing unit 8 takes time in judging in advance that figures to be rendered do not overlap at all. Thus, there is a problem in that speedup of rendering in the apparatus as a whole cannot be realized.

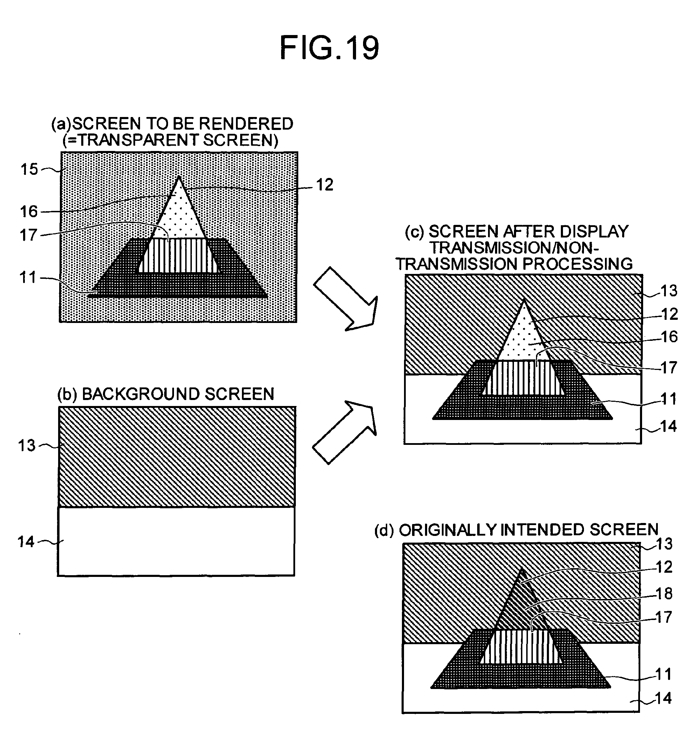

Further, when both the alpha blending in rendering processing and the alpha blending in display processing are performed, the alpha blending in rendering processing is applied to black. Thus, black is transmitted on a screen as a result of rendering of the frame buffer. When this screen is subjected to the display blend processing, a blackish color undergone the rendering blend is set as a blending screen. In the case of the display transmission/non-transmission processing, a display non-transmission part changes to a blackish color and is not blended with a background screen (see Fig. 19).

In Fig. 19, (a) is a screen subjected to transmission processing with the alpha blending in rendering processing, (b) is a screen subjected to non-transmission processing, and (c) is a screen showing a result of the display transmission/non-transmission processing. In the screen subjected to transmission processing shown in Fig. 19(a), the triangle 12 is transparent in the figure in which the lower half of the triangle 12 is drawn as if the lower half of the triangle 12 is buried in the trapezoid 11. Thus, a color and a pattern of a background 15 are seen weakly in an upper half 16 of the triangle 12 and a color and a pattern of the trapezoid 11 are seen weakly in a lower half 17 of the triangle 12. In Fig. 19(c), the backgrounds 13 and 14 shown in Fig. 19(b) are used around a pattern consisting of the trapezoid 11 and the triangle 12. However, the color and the pattern of the background 15 shown in Fig. 19(a) are still seen weakly in the upper half 16 of the triangle 12.

Since the triangle 12 is transparent, as shown in Fig. 19(d), originally, a color and a pattern of the background 13 in an upper half of Fig. 19(b) have to be seen weakly. However, as described above, conventionally, there is a problem in that, when both the alpha blending in rendering processing and the display transmission/non-transmission processing are performed or when both the alpha blending in rendering processing and the alpha blending in display processing are performed, a screen different from an originally intended screen is displayed.

The invention has been devised in view of the problems and it is an object of the invention to provide a rendering apparatus that can realize speedup of rendering by applying rendering processing to a plurality of high-speed temporary memories and can perform normal rendering without causing mismatching at the time of the alpha blending.

It is another object of the invention to provide a display control apparatus that, even when both the alpha blending in rendering processing and the display transmission/non-transmission processing are performed or both the alpha blending in rendering processing and the alpha blending in display processing are performed, can obtain a display result, in which the respective processings are synthesized, correctly.

## DISCLOSURE OF THE INVENTION

To attain the objects, a rendering apparatus according to the invention includes a low-speed frame buffer with a large capacity and a high-speed temporary memory that with a small storage capacity. A temporary memory rendering unit subjects a rendering result already stored in the temporary memory and a rendering result of rendering to be applied to the temporary memory to blend processing, and stores a result of the blend processing in the temporary memory. A frame buffer rendering unit subjects the rendering result already stored in the frame buffer and the rendering result stored in the temporary memory to blend processing, and stores a result of the blend processing in the frame buffer.

In the present invention, the temporary memory rendering unit has the following structure. That is, the temporary memory rendering unit includes a first subtracter that subtracts a color code $C_t$ of an image already rendered in the temporary memory from a color code $C$ of an image to be rendered in the temporary memory. The temporary memory rendering unit further includes a first multiplier that multiplies a result of the calculation of the first subtracter by a blend ratio $\alpha$ of the image to be rendered in the temporary memory. The temporary memory rendering unit further includes an adder that adds the color code $C$ of the image to be rendered in the temporary memory to a result of the calculation of the first multiplier and sets a result of the addition as a new color code of the image already rendered in the temporary memory. The temporary memory rendering unit further includes a second subtracter that subtracts the blend ratio $\alpha$ of the image to be rendered in the temporary memory from 1. The temporary memory rendering unit further includes a second multiplier that multiplies a result of the calculation of the second subtracter by a blend ratio $\alpha_t$ of the image already rendered in the temporary memory and sets a result of the multiplication as a new blend ratio of the image already rendered in the temporary memory.

The frame buffer rendering unit has the following structure. That is, the frame buffer rendering unit includes a third multiplier that multiplies a color code $C_f$ of an image rendered in the frame buffer by the blend ratio $\alpha_t$ of the

image already rendered in the temporary memory. The frame buffer rendering unit further includes a second adder that adds the color code $C_t$ of the image rendered in the temporary memory to a result of the calculation of the third multiplier and sets a result of the addition as a new color code of the image rendered in the frame buffer.

According to the invention, the temporary memory rendering unit subjects a rendering result already stored in the temporary memory and a rendering result of rendering to be applied to the temporary memory to the blend processing, and the frame buffer rendering unit subjects a rendering result already stored in the frame buffer and a rendering result stored in the temporary memory to the blend processing. Thus, high-speed rendering is possible and it is possible to perform the alpha blending normally.

To attain the objects, in a display control apparatus according to the invention, a rendering unit subjects a rendering result already stored in the frame buffer and a rendering result of rendering to be applied to the frame buffer to blend processing and stores a result of the blend processing in the frame buffer. A display control unit subjects transmission or non-transmission processing to a plurality of rendering results already stored in the frame buffer by a unit of pixel and synthesizes the rendering results.

In the present invention, the rendering unit has the following structure. That is, the rendering unit includes a first subtracter that subtracts a color code $C_f$ of an image already rendered in the frame buffer from a color code C of an image to be rendered in the frame buffer. The rendering unit further includes a first multiplier that multiplies a result of the calculation of the first subtracter by a blend ratio $\alpha$ of the image to be rendered in the frame buffer. The rendering unit further includes an adder that adds the color code C of the image to be rendered in the frame buffer to a result of the calculation of the first multiplier and sets a result of the addition as a new color code of the image already rendered in the temporary memory. The rendering unit further includes a second subtracter that subtracts the blend ratio $\alpha$ of the image to be rendered in the frame buffer from 1. The rendering unit further includes a second multiplier that multiplies a result of the calculation of the second subtracter by a blend ratio $\alpha_f$ of the image already rendered in the frame buffer and sets a result of the multiplication as a new blend ratio of the image already rendered in the frame buffer.

The display control unit has the following structure. That is, the display control unit includes a third multiplier that multiplies a color code $C_d$ of an image rendered in a background screen by the blend ratio $\alpha_s$ of the image already rendered in a transparent screen. The display control unit further includes a second adder that adds the color code $C_s$ of the image rendered in the transparent screen to a result of the calculation of the third multiplier and sets a result of the addition as a result of synthesis.

According to the invention, the rendering unit subjects a rendering result already stored in the frame buffer and a rendering result of rendering to be applied to the frame buffer to the blend processing, and the display control unit subjects a plurality of rendering results already stored in the frame buffer to the transmission or non-transmission processing by a unit of pixel. Thus, even when the alpha blending in rendering processing and the display transmission/non-transmission processing are performed simultaneously, it is possible to obtain a display result, in which the respective processing are synthesized, correctly.

To attain the objects, in a display control apparatus according to the invention, a rendering unit subjects a rendering result already stored in the frame buffer and a rendering result of rendering to be applied to the frame buffer and stores a result of the blend processing in the frame buffer. A display control unit subjects blend processing to a plurality of rendering results already stored in the frame buffer and synthesizes the rendering results.

In the present invention, the rendering unit has the following structure. That is, the rendering unit includes a first subtracter that subtracts a color code $C_f$ of an image already rendered in the frame buffer from a color code C of an image to be rendered in the frame buffer. The rendering unit further includes a first multiplier that multiplies a result of the calculation of the first subtracter by a blend ratio $\alpha$ of the image to be rendered in the frame buffer. The rendering unit further includes an adder that adds the color code C of the image to be rendered in the frame buffer to a result of the calculation of the first multiplier and sets a result of the addition as a new color code of the image already rendered in the temporary memory. The rendering unit further includes a second subtracter that subtracts the blend ratio $\alpha$ of the image to be rendered in the frame buffer from 1. The rendering unit further includes a second multiplier that multiplies a result of the calculation of the second subtracter by a blend ratio $\alpha_f$ of the image already rendered in the frame buffer and sets a result of the multiplication as a new blend ratio of the image already rendered in the frame buffer.

The display control unit has the following structure. That is, the display control unit includes a third multiplier that multiplies a color code $C_d$ of an image rendered in a background screen by a blend ratio $\alpha_s$ of an image rendered in a transparent screen. The display control unit further includes a third subtracter that subtracts a result of the calculation of the third multiplier from a color code $C_s$ of the image rendered in the transparent screen. The display control unit further includes a fourth multiplier that multiplies a result of the calculation of the third subtracter by a display transmittance $\alpha_x$ of the transparent screen and the background screen. The display control unit further includes a second adder that adds a result of the calculation of the fourth multiplier and the result of the calculation of the third multiplier and sets a result of the addition as a result of the synthesis.

According to the invention, the rendering unit subjects a rendering result already stored in the frame buffer and a rendering result of rendering to be applied to the frame buffer to the blend processing, and the display control unit subjects a plurality of rendering results already stored in the frame buffer to the blend processing and synthesizes the rendering results. Thus, even when the alpha blending in rendering processing and the alpha blending in display processing are performed simultaneously, it is possible to obtain a display result, in which the respective processing are synthesized, correctly.

BRIEF DESCRIPTION OF THE DRAWINGS

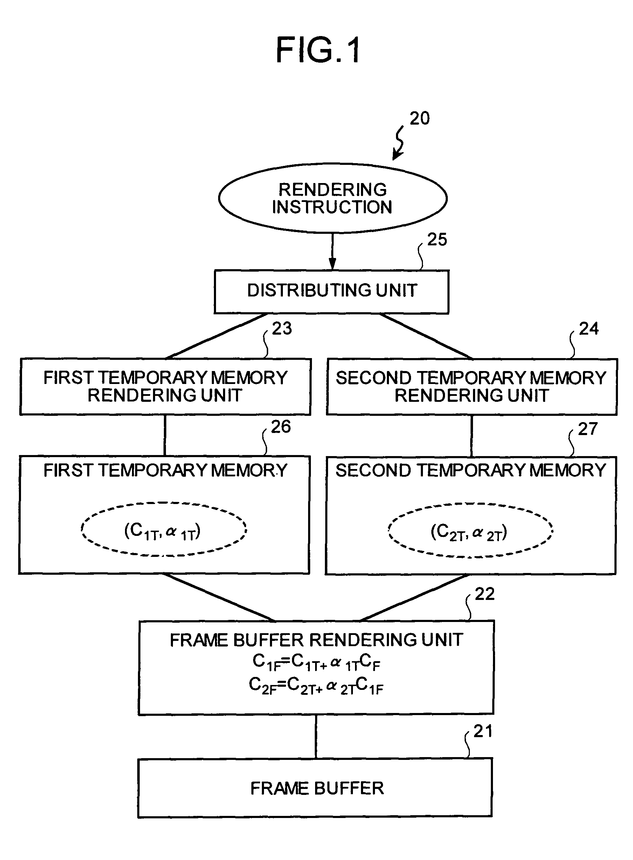

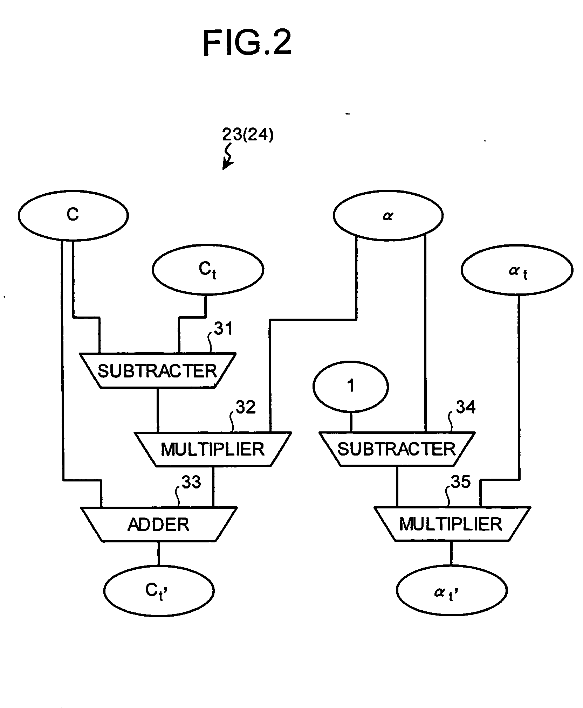

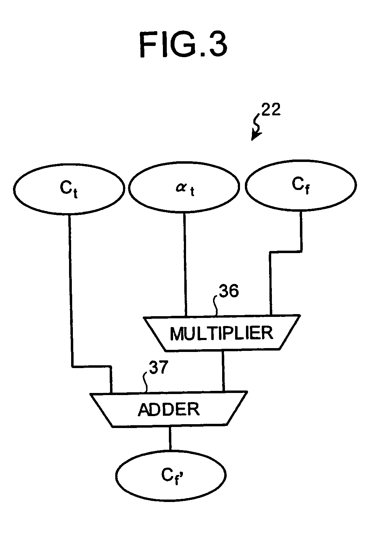

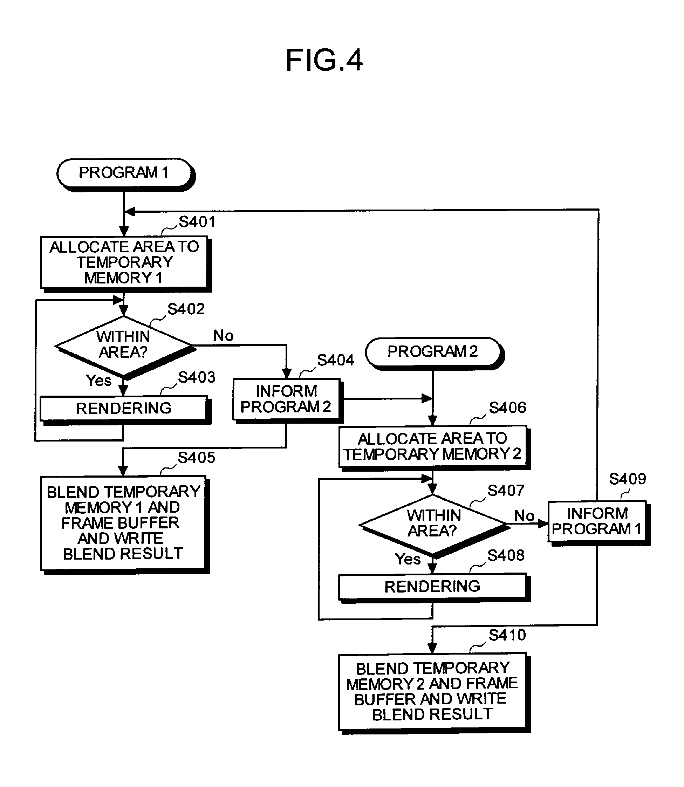

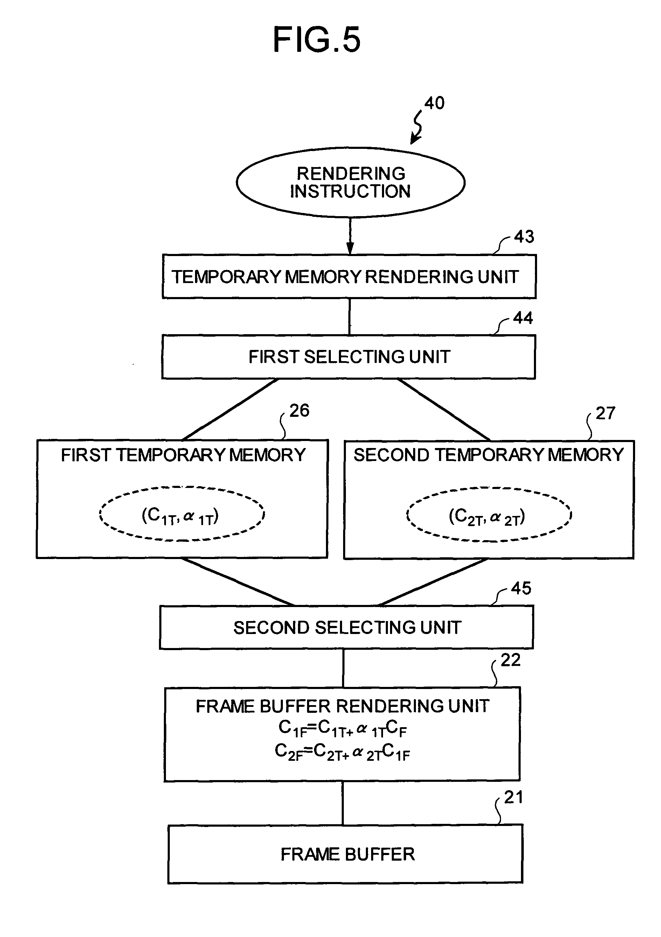

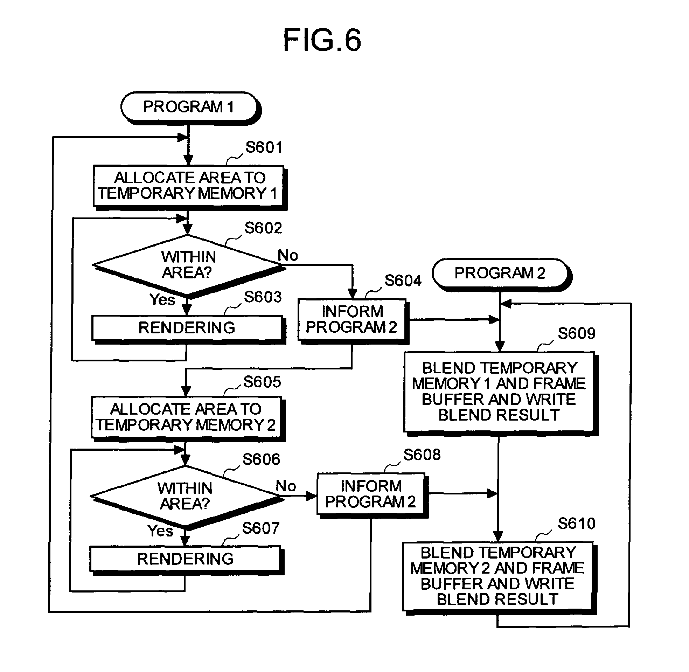

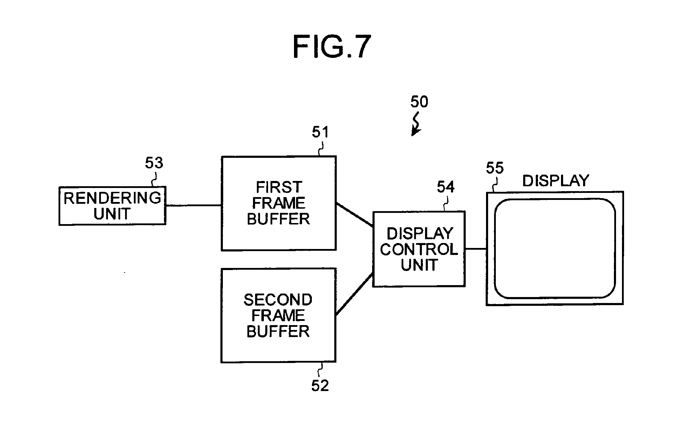

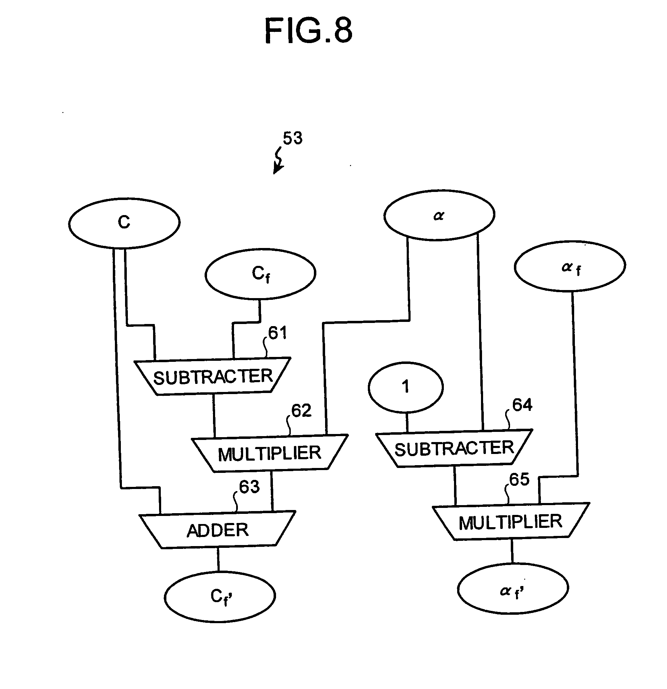

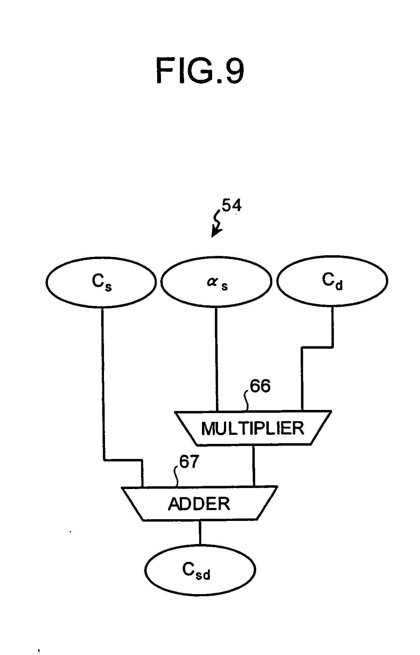

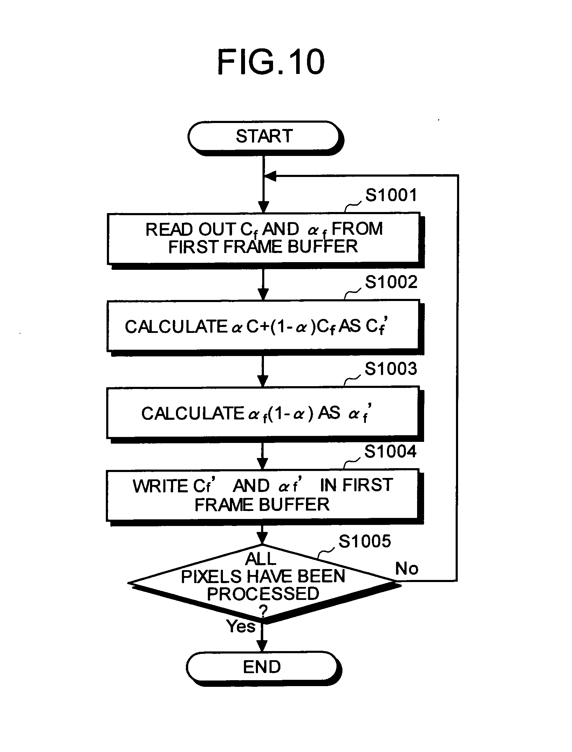

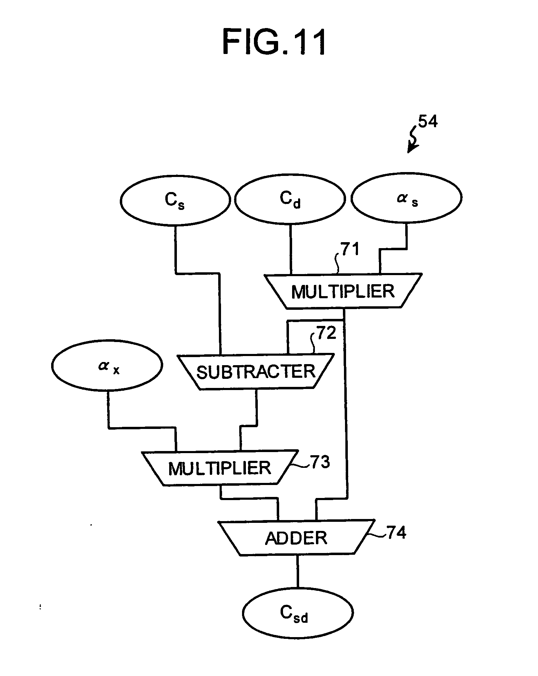

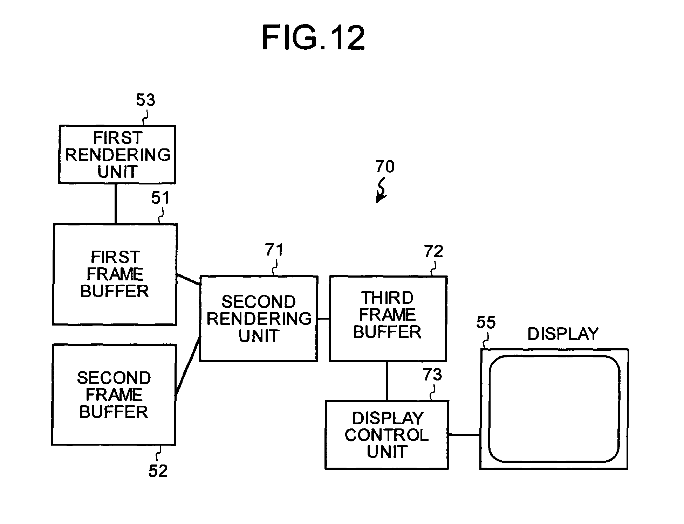

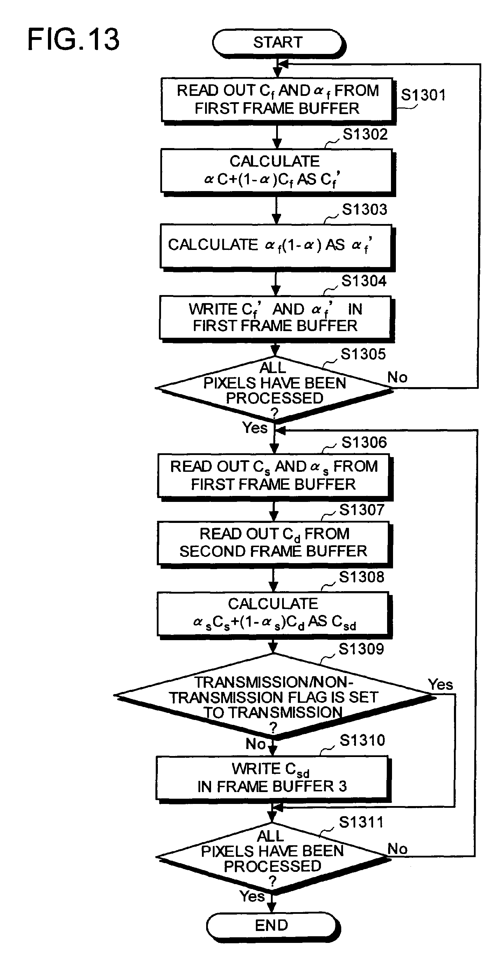

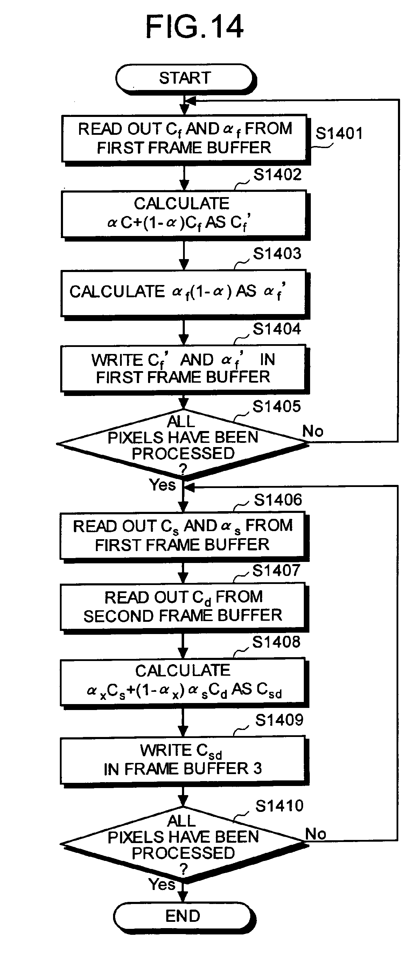

Fig. 1 is a block diagram of a schematic structure of a rendering apparatus in a first embodiment of the invention; Fig. 2 is a block diagram of a structure of a temporary memory rendering unit of the rendering apparatus in the first embodiment; Fig. 3 is a block diagram of a structure of a frame buffer rendering unit of the rendering apparatus in the first embodiment; Fig. 4 is a flowchart of a program for realizing the rendering apparatus in the first embodiment according to software processing; Fig. 5 is a block diagram of a schematic structure of a rendering apparatus in a second embodiment of the invention; Fig. 6 is a flowchart of a program for realizing the rendering apparatus in the second embodiment according to software processing; Fig. 7 is a block diagram of a schematic structure of a display control apparatus in a third embodiment of the invention; Fig. 8 is a block diagram of a structure of a rendering unit of the display control apparatus in the third embodiment; Fig. 9 is a block diagram of a structure of a display control unit of the display control apparatus in the third embodiment; Fig. 10 is a flowchart of a program for realizing a part of the display control apparatus in the third embodiment according to software processing; Fig. 11 is a block diagram of a structure of a display control unit of a display control apparatus in a fourth embodiment of the invention; Fig. 12 is a block diagram of a schematic structure of a display control apparatus in a fifth embodiment of the invention; Fig. 13 is a flowchart of a program for realizing a rendering apparatus in the fifth embodiment according to software processing; Fig. 14 is a flowchart of a program for realizing a rendering apparatus in a sixth embodiment of the invention according to software processing; Fig. 15 is a block diagram of a schematic structure of a conventional rendering apparatus; Fig. 16 is a block diagram of a schematic structure of a conventional rendering apparatus; Fig. 17 is a schematic diagram for explaining a result of display transmission/non-transmission processing without alpha blending in rendering processing; Fig. 18 is a schematic diagram for explaining a result of rendering with the alpha blending in rendering processing; and Fig. 19 is a schematic diagram for explaining a result of display transmission/non-transmission processing with the alpha blending in rendering processing.

BEST MODE FOR CARRYING OUT THE INVENTION

Exemplary embodiments of the invention will be hereinafter explained in detail with reference to the drawings.

(First embodiment)

In a first embodiment, an calculation for a frame buffer and an calculation for a temporary memory are performed separately. First, a method for the separation of the calculation will be explained.

A color code already rendered in the frame buffer is $C_F$ and a color code to be rendered first is $C_1$. A blend ratio (0.0 to 1.0) to be used first is $\alpha_1$. Then, a blend result $C_{1F}$ of the frame buffer color $C_F$ already rendered and the color $C_1$ to be rendered first is represented by the following expression (1).

$$C_{1F}=\alpha_1 C_1+(1-\alpha_1)C_F \tag{1}$$

The color code already rendered in the frame buffer is set to $C_{1F}$ according to blend processing represented by expression (1). Next, a color code to be rendered second is $C_2$ and a blend ratio (0.0 to 1.0) to be used second is $\alpha_2$. In this case, a blend result $C_{21F}$ of the frame buffer color $C_{1F}$ already rendered and the color $C_2$ to be rendered second is represented by the following expression (2).

$$C_{21F}=\alpha_2 C_2+(1-\alpha_2)C_{1F} \tag{2}$$

The color code already rendered in the frame buffer is set to $C_{21F}$ according to blend processing represented by expression (2). Therefore, when a color code to be rendered third is $C_3$ and a blend ratio (0.0 to 1.0) to be used

third is $\alpha_3$, a blend result $C_{321F}$ of the frame buffer color $C_{21F}$ already rendered and the color $C_3$ to be rendered third is represented by the following expression (3).

$$C_{321F}=\alpha_3 C_3+(1-\alpha_3)C_{21F} \tag{3}$$

Although not described here, blend results of color codes already rendered in the frame buffer and colors to be rendered fourth and subsequently are calculated in the same manner. The calculation in expressions (1) to (3) are modified as indicated by the following expressions (4) to (6), respectively. The modification of the calculation are the same for the blend results of color codes already rendered in the frame buffer and colors to be rendered fourth and subsequently.

$$C_{1F}=\alpha_1 C_1+(1-\alpha_1)C_F$$
$$= C_1'+(1-\alpha_1)C_F \qquad \ldots (4)$$

$$C_{21F}=\alpha_2 C_2+(1-\alpha_2)C_{1F}$$
$$=\alpha_2 C_2+(1-\alpha_2)C_1'+(1-\alpha_2)(1-\alpha_1)C_F$$
$$=C_{21}'+(1-\alpha_2)(1-\alpha_1)C_F \qquad \ldots (5)$$

$$C_{321F}=\alpha_3 C_3+(1-\alpha_3)C_{21F}$$
$$=\alpha_3 C_3+(1-\alpha_3)C_{21}'+(1-\alpha_3)(1-\alpha_2)(1-\alpha_1)C_F$$
$$=C_{321}'+(1-\alpha_3)(1-\alpha_2)(1-\alpha_1)C_F \qquad \ldots (6)$$

By modifying the calculation as described above, the calculation $C_1'$, $C_{21}'$, and $C_{321}'$ for the temporary memory are separated from the calculation $(1-\alpha_1)C_F$, $(1-\alpha_2)(1-\alpha_1)C_F$, and $(1-\alpha_3)(1-\alpha_2)(1-\alpha_1)C_F$ for the frame buffer. Therefore, when there are a plurality of temporary memories, it is possible to perform the calculation $C_1'$, $C_{21}'$, and $C_{321}'$ for the respective temporary memories independently.

Color codes and alpha elements, which are recorded in the temporary memories in respective rendering stages, are $C_1'$ and $(1-\alpha_1)$ in rendering for the first time, $C_{21}'$ and $(1-\alpha_2)(1-\alpha_1)$ in rendering for the second time, and $C_{321}'$ and $(1-\alpha_3)(1-\alpha_2)(1-\alpha_1)$ in rendering for the third time. Subsequently, in the same manner, color codes and alpha elements to be recorded in the temporary memories are overwritten.

When rendering information, that is, the color codes and the alpha elements stored in the temporary memories are $C_T$ and $\alpha_T$, respectively, an calculation to be performed between the temporary memories and the frame buffer is represented by the following expression (7).

$$C_{TF}=C_T+\alpha_T C_F \tag{7}$$

As described above, when there are a plurality of temporary memories, it is possible to perform the calculation $C_T$ for the respective temporary memories independently. However, when the calculation (7) is performed between the temporary memories and the frame buffer, the order of the temporary memories to be an object of the calculation (7) is required to be adjusted to the order of rendering instructions.

To explain the above specifically, when rendering based on first to fifth rendering instructions is applied to a first temporary memory and rendering based on sixth to tenth rendering instructions is applied to a second temporary memory, it is possible to perform the calculation $C_T$ for the respective temporary memories in parallel. Concerning the final calculation $C_{TF}$ between the temporary memories and the frame buffer, the calculation for the first temporary memory is performed first and, then, the calculation for the second temporary memory is performed, whereby it is possible to keep consistency of the calculation.

Next, a specific constitution of the first embodiment will be explained. Fig. 1 is a block diagram of a schematic structure of a rendering apparatus in the first embodiment. As shown in Fig. 1, a rendering apparatus 20 in the first embodiment includes: a frame buffer 21 including an SDRAM; a frame buffer rendering unit 22 that applies rendering to the frame buffer 21; a small capacity (e.g., 64x64 pixels) and high-speed first temporary memory 26 including an SRAM; a first temporary memory rendering unit 23 that applies rendering to the first temporary memory 26; a second temporary memory rendering unit 24 that applies rendering to the second temporary memory 27; and a distributing unit 25 that allocates an area, in which a figure to be drawn according to a rendering instruction is placed, to the first temporary memory 26 or the second temporary memory 27.

Next, structures of the first temporary memory rendering unit 23 and the second temporary memory rendering unit 24 will be explained. However, the first temporary memory rendering unit 23 has the same structure as the second temporary memory rendering unit 24. Thus, only the first temporary memory rendering unit 23 will be explained and the second temporary memory rendering unit 24 will not be explained. Reference numerals of components of the second temporary memory rendering unit 24 are parenthesized. In this explanation, a color code and a blend ratio of images already rendered in the temporary memories 26 and 27 are $C_t$ and $\alpha_t$, respectively. A color code and a blend ratio of images to be rendered in the temporary memories 26 and 27 are C and $\alpha$, respectively.

Fig. 2 is a block diagram of the structure of the first temporary memory rendering unit 23 (the second temporary memory rendering unit 24). The first temporary memory rendering unit 23 (the second temporary memory rendering unit 24) includes a first subtracter 31, a first multiplier 32, a first adder 33, a second subtracter 34, and a second multiplier 35. The color codes and the alpha elements in the respective rendering stages, that is, $C_1'$ and $(1-\alpha_1)$, $C_{21}'$ and $(1-\alpha_2)(1-\alpha_1)$, and $C_{321}'$ and $(1-\alpha_3)(1-\alpha_2)(1-\alpha_1)$ are calculated according to calculation by the first subtracter 31, the first multiplier 32, the first adder 33, the second subtracter 34, and the second multiplier 35.

The first subtracter 31 subtracts the color code $C_t$ of the image already rendered in the temporary memory 26 (27) from the color code C of the image to be rendered in the temporary memory 26 (27). The first multiplier 32 multiplies a result of the calculation of the first subtracter 31 by the blend ratio $\alpha$ of the image to be rendered in the temporary memory 26 (27).

The first adder 33 adds the color code C of the image to be rendered in the temporary memory 26 (27) to a result of the calculation of the first multiplier 32. A result $C_t'$ of the calculation of the first adder 33 is stored in the temporary memory 26 (27) as a new color code of the image already rendered in the temporary memory 26 (27). In the next rendering applied to the temporary memory 26 (27), the result $C_t'$ is used as the color code $C_t$ of the image already rendered in the temporary memory 26 (27).

The second subtracter 34 subtracts the blend ratio $\alpha$ of the image to be rendered in the temporary memory 26 (27) from 1. The second multiplier 35 multiplies a result of the calculation of the second subtracter 34 by the blend ratio $\alpha_t$ of the image already rendered in the temporary memory 26 (27). A result $\alpha_t'$ of the calculation of the second multiplier 35 is stored in the temporary memory 26 (27) as a new blend ratio of the image already rendered in the temporary memory 26 (27). In the next rendering applied to the temporary memory 26 (27), the result $\alpha_f'$ is used as the blend ratio $\alpha_t$ of the image already rendered in the temporary memory 26 (27).

Next, a structure of the frame buffer rendering unit 22 will be explained. In this explanation, a color code and a blend ratio of images rendered in the temporary memories 26 and 27 are $C_t$ and $\alpha_t$, respectively, and a color code of an image rendered in the frame buffer 21 is $C_f$.

Fig. 3 is a block diagram of the structure of the frame buffer rendering unit 22. The frame buffer rendering unit 22 includes a third multiplier 36 and a second adder 37. The calculation of expression (7) is performed according to calculation by the third multiplier 36 and the second adder 37. Note that $C_t$ equals $C_T$, $\alpha_T$ equals $\alpha_t$, and $C_f$ equals $C_F$.

The third multiplier 36 multiplies the color code $C_f$ of the image rendered in the frame buffer 21 by the blend ratio $\alpha_t$ of the image rendered in the temporary memory 26 (27). The second adder 37 adds the color code $C_t$ of the image rendered in the temporary memory 26 (27) to a result of the calculation of the third multiplier 36. A result $C_f'$ of the calculation of the second adder 37 ($C_{TF}$ in expression (7)) is stored in the frame buffer 21 as a new color code of the image rendered in the frame buffer 21. In the next final calculation between the temporary memory 27 (or 26) and the frame buffer 21, the result $C_t'$ is used as the color code $C_f$ of the image rendered in the frame buffer 21.

Next, an operation of the rendering apparatus 20 in the first embodiment will be explained. First, the first temporary memory 26 and the second temporary memory 27 are cleared with C=0 and $\alpha$=1.0 in advance. This clear processing is performed to set $C_t$ to $\alpha C$ and $\alpha_t$ to $(1-\alpha)$ at the time of a first operation in a blend processing operation in the first temporary memory rendering unit 23 and the second temporary memory rendering unit 24 shown in Fig. 2.

First, the distributing unit 25 allocates an area, in which a figure to be drawn according to a rendering instruction is placed, for example, an area of 64x64 pixels to the first temporary memory 26. This area allocated to the first temporary memory 26 is represented as an area A for convenience of explanation. As long as a figure drawn according to a rendering instruction is within the area A, the distributing unit 25 continues to send the rendering instruction to the first temporary memory rendering unit 23. The first temporary memory rendering unit 23 applies rendering processing to the first temporary memory 26 according to the sent rendering instruction.

When a figure drawn according to a rendering instruction deviates from the area A while the rendering processing is applied to the first temporary memory 26, the distributing unit 25 allocates a new 64x64 pixel area including the figure deviating from the area A to the second temporary memory 27. A color code and an alpha element recorded in the first temporary memory 26 at this point are $C_{1T}$ and $\alpha_{1T}$, respectively. In addition, the area allocated to the second temporary memory 26 at this point is represented as an area B for convenience of explanation.

As long as a figure drawn according to a rendering instruction is within the area B, the distributing unit 25 continues to send the rendering instruction to the second temporary memory rendering unit 24. The second temporary memory rendering unit 24 applies rendering processing to the second temporary memory 27 according to the sent rendering instruction. On the other hand, the frame buffer rendering unit 22 performs blend processing between the first temporary memory 26 and the frame buffer 21 and writes a result of the blend processing in the frame buffer 21.

As described above, the color code and the alpha element recorded in the first temporary memory 26 are $C_{1T}$ and $\alpha_{1T}$, respectively. When a color code written in the frame buffer 21 is $C_F$, the color code $C_{1F}$, which is written in the frame buffer 21 anew according to blend processing between the first temporary memory 26 and the frame buffer 21, is represented by the following expression (8).

$$C_{1F}=C_{1T}+\alpha_{1T}C_F \tag{8}$$

When a figure drawn according to a rendering instruction deviates from the area B while the rendering processing is applied to the second temporary memory 27, the distributing unit 25 allocates a new 64x64 pixel area including the figure deviating from the area B to the first temporary memory 26. A color code and an alpha element recorded in the second temporary memory 27 at this point are $C_{2T}$ and $\alpha_{2T}$, respectively. In addition, the area allocated to the first temporary memory 26 at this point is represented as an area C for convenience of explanation.

As long as a figure drawn according to a rendering instruction is within the area C, the distributing unit 25 continues to send the rendering instruction to the first temporary memory rendering unit 23. The first temporary memory rendering unit 23 applies rendering processing to the first temporary memory 26 according to the sent rendering instruction. On the other hand, the frame buffer rendering unit 22 performs blend processing between the second temporary memory 27 and the frame buffer 21 and writes a result of the blend processing in the frame buffer 21.

As described above, the color code and the alpha element recorded in the second temporary memory 27 are $C_{2T}$ and $\alpha_{2T}$, respectively, and the color code of the frame buffer 21 is $C_{1F}$. Therefore, a color code $C_{2F}$ represented by the following expression (9) is written in the frame buffer 21 anew.

$$C_{2F}=C_{2T}+\alpha_{2T}C_{1F} \tag{9}$$

Thereafter, the rendering processing applied to the first temporary memory 26 and the rendering processing applied to the second temporary memory 27 are repeated alternately.

Note that it is also possible to use software to realize the operation of the rendering apparatus 20 in the first embodiment. In this case, a not-shown processing device executes a program of a flowchart shown in Fig. 4, whereby the functions of the frame buffer rendering unit 22, the first temporary memory rendering unit 23, the second temporary memory rendering unit 24, and the distributing unit 25 are realized.

The flowchart shown in Fig. 4 will be explained. First, when a program 1 is executed, the processing device clears the first temporary memory 26 and the second temporary memory 27 and, then, allocates the area A to the first temporary memory 26 (step S401). As long as a figure drawn according to a rendering instruction is within the area A ("Yes" at step S402), the processing device applies rendering processing to the first temporary memory 26 (step S403).

When the figure drawn according to the rendering instruction deviates from the area A while the rendering processing is applied to the first temporary memory 26 ("No" at step S402), the processing device informs a program 2 of the deviation of the figure from the area A (step S404). In the program 2, the processing device allocates the area B to the second temporary memory 27 (step S406). As long as a figure drawn according to a rendering instruction is within the area B ("Yes" at step S407), the processing device applies the rendering processing to the second temporary memory 27 (step S408).

In the program 1, the processing device performs blend processing between the first temporary memory 26 and the frame buffer 21 and writes a result of the blend processing in the frame buffer 21 (step S405). On the other hand, when the figure drawn according to the rendering instruction deviates from the area B while the rendering processing is applied to the second temporary memory 27 ("No" at step S407), the processing device informs the program 1 of the deviation of the figure from the area B (step S409).

The processing device performs blend processing between the second temporary memory 27 and the frame buffer 21 and writes a result of the blend processing in the frame buffer 21 (step S410). In the program 1, the processing device allocates the area C to the first temporary memory 26 (step S401). Thereafter, the processing device executes steps S402 to S405.

According to the first embodiment, in the first temporary memory 26 and the second temporary memory 27, it is possible to perform blend processing for rendering results already stored in the temporary memories and rendering results to be rendered in the temporary memories independently. In addition, blend processing for a rendering result already stored in the frame buffer 21 and rendering results stored in the temporary memories 26 and 27 are performed according to the order of rendering instructions. Thus, high-speed rendering is possible and it is possible to perform alpha blending normally.

(Second embodiment)

Fig. 5 is a block diagram of a schematic structure of a rendering apparatus in a second embodiment. As shown in Fig. 5, a rendering apparatus 40 in the second embodiment includes a frame buffer 21, a frame buffer rendering unit 22, a first temporary memory 26, a second temporary memory 27, a temporary memory rendering unit 43 that applies rendering to the first temporary memory 26 and the second temporary memory 27, and selecting units 44 and 45 that select the first temporary memory 26 or the second temporary memory 27 alternatively.

The temporary memory rendering unit 43 is the same as the first temporary memory rendering unit 23 and the second temporary memory rendering unit 24 in the first embodiment. Therefore, an explanation of the temporary memory rendering unit 43 is omitted. Note that, in the second embodiment, components same as those in the first embodiment are denoted by reference numerals and signs identical to those in the first embodiment and explanations of the components are omitted.

Next, an operation of the rendering apparatus 40 in the second embodiment will be explained. First, the first temporary memory 26 and the second temporary memory 27 are cleared with C=0 and $\alpha$=1.0 in advance. The first selecting unit 44 allocates a 64x64 pixel area (an area A), in which a figure drawn according to a rendering instruction is placed, to the first temporary memory 26. As long as a figure drawn according to a rendering instruction is within the area A, the first selecting unit 44 continues to select the first temporary memory 26. Consequently, the temporary memory rendering unit 43 applies rendering processing to the first temporary memory 26 according to the sent rendering instruction.

On the other hand, the second selection unit 45 selects the second temporary memory 27. The frame buffer rendering unit 22 performs blend processing between the second temporary memory 27 and the frame buffer 21 and writes a result of the blend processing in the frame buffer 21.

When a figure drawn according to a rendering instruction deviates from the area A while the rendering processing is applied to the first temporary memory 26, the result of the blend processing performed between the second temporary memory 27 and the frame buffer 21 is written in the frame buffer 21. Then, the selecting unit 44 allocates a new 64x64 pixel area including the figure deviating from the area A to the second temporary memory 27. A color code and an alpha element recorded in the first temporary memory 26 at this point are Cir and $\alpha_{1T}$, respectively.

As long as a figure drawn according to a rendering instruction is within the area B, the first selecting unit 44 continues to select the second temporary memory 27. Consequently, the temporary memory rendering unit 43 applies rendering processing to the second temporary memory 27 according to the sent rendering instruction.

On the other hand, the second selecting unit 45 selects the first temporary memory 26. The frame buffer rendering unit 22 performs blend processing between the first temporary memory 26 and the frame buffer 21 and writes a result of the blend processing in the frame buffer 21. The color code $C_{1F}$ represented by expression (8) is written in the frame buffer 21 anew.

When a figure drawn according to a rendering instruction deviates from the area B while the rendering processing is applied to the second temporary memory 27, the result of the blend processing performed between the first temporary memory 26 and the frame buffer 21 is written in the frame buffer 21. Then, the first selecting unit 44 allocates a new 64×64 pixel area (an area C) including the figure deviating from the area B to the first temporary memory 26. A color code and an alpha element recorded in the second temporary memory 27 at this point are $C_{2T}$ and $\alpha_{2T}$, respectively.

As long as a figure drawn according to a rendering instruction is within the area C, the first selecting unit 44 continues to select the first temporary memory 26. Consequently, the temporary memory rendering unit 43 applies rendering processing to the first temporary memory 26 according to the sent rendering instruction.

On the other hand, the second selecting unit 45 selects the second temporary memory 27. The frame buffer rendering unit 22 performs blend processing between the second temporary memory 27 and the frame buffer 21 and writes a result of the blend processing in the frame buffer 21. The color code $C_{2F}$ represented by expression (9) is written in the frame buffer 21 anew.

Thereafter, the rendering processing applied to the first temporary memory 26 and the rendering processing applied to the second temporary memory 27 are repeated alternately.

Note that it is also possible to use software to realize the operation of the rendering apparatus 40 in the second embodiment. In this case, a not-shown processing device executes a program of a flowchart shown in Fig. 6, whereby the functions of the frame buffer rendering unit 22, the temporary memory rendering unit 43, and the selecting units 44 and 45 are realized.

The flowchart shown in Fig. 6 will be explained. First, when a program 1 is executed, the processing device clears the first temporary memory 26 and the second temporary memory 27 and, then, allocates the area A to the first temporary memory 26 (step S601). As long as a figure drawn according to a rendering instruction is within the area A ("Yes" at step S602), the processing device applies rendering processing to the first temporary memory 26 (step S603).

When the figure drawn according to the rendering instruction deviates from the area A while the rendering processing is applied to the first temporary memory 26 ("No" at step S602), the processing device informs a program 2 of the deviation of the figure from the area A (step S604). In the program 2, the processing device performs blend processing between the first temporary memory 26 and the frame buffer 21 and writes a result of the blend processing in the frame buffer 21 (step S609).

On the other hand, in the program 1, the processing device allocates the area B to the second temporary memory 27 (step S605). As long as a figure drawn according to a rendering instruction is within the area B ("Yes" at step S606), the processing device applies rendering processing to the second temporary memory 27 (step S607).

When the figure drawn according to the rendering instruction deviates from the area B while the rendering processing is applied to the second temporary memory 27 ("No" at step S606), the processing device informs the program 2 of the deviation of the figure from the area B (step S608). In the program 2, the processing device performs blend processing between the second temporary memory 27 and the frame buffer 21 and writes a result of the blend processing in the frame buffer 21 (step S61 0). On the other hand, in the program 1, the processing device allocates the area C to the first temporary memory 26 (step S601). Thereafter, processing device executes steps S602 to S608.

According to the second embodiment, in the first and the second temporary memories 26 and 27, it is possible to perform blend processing for rendering results already stored in the temporary memories and rendering results to be rendered in the temporary memories. In addition, blend processing for a rendering result already stored in the frame buffer 21 and rendering results stored in the temporary memories 26 and 27 is performed according to the order of rendering instructions. Thus, high-speed rendering is possible and it is possible to perform alpha blending normally.

(Third embodiment)

In a third embodiment of the invention, a calculation for a frame buffer and an calculation for display are performed separately. First, a method for the separation of the calculation will be explained.

A color code already rendered in the frame buffer is $C_F$ and a color code to be rendered first is $C_1$. A blend ratio (0.0 to 1.0) to be used first is $\alpha_1$. Then, a blend result $C_{1F}$ of the frame buffer color $C_F$ already rendered and the color $C_1$ to be rendered first is represented by the following expression (10).

$$C_{1F}=\alpha_1 C_1+(1-\alpha_1)C_F \qquad (10)$$

The color code already rendered in the frame buffer is set to $C_{1F}$ according to blend processing represented by expression (10). Next, a color code to be rendered second is $C_2$ and a blend ratio (0.0 to 1.0) to be used second is $\alpha_2$. In this case, a blend result $C_{21F}$ of the frame buffer color $C_{1F}$ already rendered and the color $C_2$ to be rendered second is represented by the following expression (11).

$$C_{21F}=\alpha_2 C_2+(1-\alpha_2)C_{1F} \qquad (11)$$

The color code already rendered in the frame buffer is set to $C_{21F}$ according to blend processing represented by expression (11). Therefore, when a color code to be rendered third is $C_3$ and a blend ratio (0.0 to 1.0) to be used third is $\alpha_3$, a blend result $C_{321F}$ of the frame buffer color $C_{21F}$ already rendered and the color $C_3$ to be rendered third is represented by the following expression (12).

$$C_{321F}=\alpha_3 C_3+(1-\alpha_3)C_{21F} \qquad (12)$$

Although not described here, blend results of color codes already rendered in the frame buffer and colors to be rendered fourth and subsequently are calculated in the same manner. The calculation in expressions (10) to (12) are modified as indicated by the following expressions (13) to (15), respectively. The modification of the calculation are the same for the blend results of color codes already rendered in the frame buffer and colors to be rendered fourth and subsequently.

$$C_{1F}=\alpha_1 C_1+(1-\alpha_1)C_F$$
$$= C_1{'}+(1-\alpha_1)C_F \qquad \ldots (13)$$

$$C_{21F}=\alpha_2 C_2+(1-\alpha_2)C_{1F}$$
$$=\alpha_2 C_2+(1-\alpha_2)C_1{'}+(1-\alpha_2)(1-\alpha_1)C_F$$
$$=C_{21}{'}+(1-\alpha_2)(1-\alpha_1)C_F \qquad \ldots (14)$$

$$C_{321F}=\alpha_3 C_3+(1-\alpha_3)C_{21F}$$
$$=\alpha_3 C_3+(1-\alpha_3)C_{21}{'}+(1-\alpha_3)(1-\alpha_2)(1-\alpha_1)C_F$$
$$=C_{321}{'}+(1-\alpha_3)(1-\alpha_2)(1-\alpha_1)C_F \qquad \ldots (15)$$

By modifying the calculation as described above, the calculation $C_1$, $C_{21}{'}$, and $C_{321}{'}$ for the second and subsequent times for the frame buffer are separated from the calculation $(1-\alpha_1)C_F$, $(1-\alpha_2)(1-\alpha_1)C_F$, and $(1-\alpha_3)(1-\alpha_2)(1-\alpha_1)$ $C_F$ for an initial value of the frame buffer. Therefore, it is possible to perform the calculation $C_1{'}$, $C_{21}{'}$, and $C_{321}{'}$ for the second and subsequent times for the frame buffer as usual rendering processing.

Color codes and alpha elements, which are recorded in the frame buffer in respective rendering stages, are $C_1{'}$ and $(1-\alpha_1)$ in rendering for the first time, $C_{21}{'}$ and $(1-\alpha_2)(1-\alpha_1)$ in rendering for the second time, and $C_{321}{'}$ and $(1-\alpha_3)$ $(1-\alpha_2)(1-\alpha_1)$ in rendering for the third time. Thereafter, in the same manner, color codes and alpha elements to be recorded in the temporary memories are overwritten.

Rendering information, that is, a color code and an alpha element, of a screen subjected to the rendering and blend processing in such a system are $C_s$ and $\alpha_s$, respectively, and the screen is a displaying blend screen. When a color code of a blend screen to be displayed is $C_D$, an calculation to be performed in display blend processing is represented by the following expression (16). In other words, the calculation for the color $C_F$ in the rendering for the first time is replaced with the calculation for the color $C_D$ of the blend screen to be displayed.

$$C_{SD}=C_S+\alpha_S C_S \qquad (16)$$

Next, a specific constitution of the third embodiment will be explained. Fig. 7 is a block diagram of a schematic structure of a display control apparatus in the third embodiment. As shown in Fig. 7, a display control apparatus 50 in the third embodiment includes a first frame buffer 51 that stores data of a transparent screen, a second frame buffer 52 that stores data of a background screen, a rendering unit 53 that applies rendering to the first frame buffer 51, and a display control unit 54 that subjects pixels of the first frame buffer 51 and pixels of the second frame buffer 52 to blend processing and displays a result of the blend processing on a display device 55 like a display.

Next, a structure of the rendering unit 53 will be explained. In this explanation, a color code and a blend ratio of images already rendered in the first frame buffer 51 are $C_t$ and $\alpha_t$, respectively. A color code and a blend ratio of images to be rendered in the first frame buffer are C and $\alpha$, respectively.

Fig. 8 is a block diagram of the structure of the rendering unit 53. The rendering unit 53 includes a first subtracter 61, a first multiplier 62, a first adder 63, a second subtracter 64, and a second multiplier 65. The color codes and the alpha elements in the respective rendering stages, that is, $C_1'$ and $(1-\alpha_1)$, $C_{21}'$ and $(1-\alpha_2)(1-\alpha_1)$, and $C_{321}'$ and $(1-\alpha_3)(1-\alpha_2)(1-\alpha_1)$ are calculated according to calculation by the first subtracter 61, the first multiplier 62, the first adder 63, the second subtracter 64, and the second multiplier 65.

The first subtracter 61 subtracts the color code $C_t$ of the image already rendered in the first frame buffer 51 from the color code C of the image to be rendered in the first frame buffer 51. The first multiplier 62 multiplies a result of the calculation of the first subtracter 61 by the blend ratio $\alpha$ of the image to be rendered in the first frame buffer 51.

The first adder 63 adds the color code C of the image to be rendered in the first frame buffer 51 to a result of the calculation of the first multiplier 62. A result $C_t'$ of the calculation of the first adder 63 is stored in the first frame buffer 51 as a new color code of the image already rendered in the first frame buffer 51. In the next rendering applied to the first frame buffer 51, the result Ct' is used as the color code $C_t$ of the image already rendered in the first frame buffer 51.

The second subtracter 64 subtracts the blend ratio $\alpha$ of the image to be rendered in the first frame buffer 51 from 1. The second multiplier 65 multiplies a result of the calculation of the second subtracter 64 by the blend ratio $\alpha_1$ of the image already rendered in the first frame buffer 51. A result $\alpha_t'$ of the second multiplier 65 is stored in the first frame buffer as a new blend ratio of the image already rendered in the first frame buffer 51. In the next rendering applied to the first frame buffer 51, the result $\alpha_t'$ is used as the blend ratio $\alpha_t$ of the image already rendered in the first frame buffer 51.

Next, a structure of the display control unit 54 will be explained. In this explanation, a color code and a blend ratio of a transparent screen rendered in the first frame buffer 51 are $C_s$ and $\alpha_s$, respectively, and a color code of a background screen rendered in the second frame buffer 52 is $C_d$.

Fig. 9 is a block diagram of the structure of the display control unit 54. The display control unit 54 includes a third multiplier 66 and a second adder 67. The calculation of expression (16) is performed according to calculation by the third multiplier 66 and the second adder 67. Note that $C_s$ equals Cs, $\alpha_s$ equals $\alpha_s$, and $C_d$ equals $C_D$.

The third multiplier 66 multiplies the color code $C_d$ of the image rendered in the second frame buffer 52 by the blend ratio $\alpha_s$ of the image rendered in the first frame buffer 51. The second adder 67 adds the color code $C_s$ of the image rendered in the first frame buffer 51 to a result of the calculation of the third multiplier 66. A result $C_{sd}$ of the calculation of the second adder 67 ($C_{SD}$ in expression (16)) is displayed on the display device 55.

Next, an operation of the display control apparatus 50 in the third embodiment will be explained. First, the first frame buffer 51 is cleared with C=0 and $\alpha$=1.0 in advance. This clear processing is performed to set $C_f$ to $\alpha C$ and $\alpha_f$ to $(1-\alpha)$ at the time of a first operation in a blend processing operation in the rendering unit 53 shown in Fig. 8.

First, the rendering unit 53 applies rendering to the first frame buffer 51 (the transparent screen). The display control unit 54 reads out data stored in the first frame buffer 51 and the second frame buffer 52 (the background screen) and confirms a flag for controlling transmission and non-transmission provided for each pixel (hereinafter referred to as transmission/non-transmission control flag).

The display control unit 54 displays the data in the second frame buffer 52 for pixels with the transmission/non-transmission control flag set OFF. In addition, for pixels with the transmission/non-transmission control flag set ON, the display control unit 54 subjects pixel data in the first frame buffer 51 and pixel data in the second frame buffer 52 to blend processing and displays the pixel data.

Note that it is also possible to use software to realize a part of the operation of the display control apparatus 50 in the third embodiment. In this case, a not-shown processing device executes a program of a flowchart shown in Fig. 10, whereby the function of the rendering unit 53, that is, alpha blending in rendering processing is realized.

The flow chart shown in Fig. 10 will be explained. First, after clearing the first frame buffer 51, the processing device reads out a color code $C_f$ and a blend ratio $\alpha_f$ from the first frame buffer 51 (step S1001). The processing device calculates $C_f'$ represented by the next expression (17) (step S1002). In addition, the processing device calculates $\alpha_f'$ represented by the following expression (18) (step S1003).

$$C_f'=\alpha C+(1-\alpha)C_f \tag{17}$$

$$\alpha_f'=\alpha_f(1-\alpha) \tag{18}$$

Subsequently, the processing device writes $C_f'$ and $\alpha_f'$ obtained from expressions (17) and (18) in the first frame buffer 51 (step S1004). The processing device repeats the processing until the processing is finished for all the pixels (step S1005). In the processing, $C_f'$ and $\alpha_f'$ written in the first frame buffer 51 anew are read out as the color code $C_f$ and the blend ratio $\alpha_f$ of the first frame buffer 51.

In the third embodiment, the rendering unit 53 subjects a rendering result already stored in the first frame buffer 51 and a rendering result of rendering to be applied to the first frame buffer 51 to blend processing. The display control unit 54 subjects the rendering result stored in the first frame buffer 51 and a rendering result stored in the second frame buffer 52 to transmission or non-transmission processing by a unit of pixel and synthesizes the rendering results. Thus, according to the third embodiment, even when display transmission/non-transmission processing is performed together with alpha blending in rendering processing, it is possible to obtain a display result, in which the respective processing are synthesized, correctly.

(Fourth embodiment)

In the third embodiment, the display control unit 54 subjects the rendering result stored in the first frame buffer 51 and the rendering result stored in the second frame buffer 52 to transmission or non-transmission processing by a unit of pixel and synthesizes the rendering results. On the other hand, in the fourth embodiment, the display control unit 54 subjects the rendering result stored in the first frame buffer 51 and the rendering result stored in the second frame buffer 52 to blend processing and synchronizes the rendering results. Since the display control unit 54 in the fourth embodiment is the same as that in the third embodiment except the above points, redundant explanations are omitted.

A structure of the display control unit 54 will be explained. In this explanation, a color code and a blend ratio of a transparent screen rendered in the first frame buffer 51 are $C_s$ and $\alpha_s$, respectively, and a color code of a background screen rendered in the second frame buffer 52 is $C_d$. In addition, a display transmittance of the transparent screen and the background screen, that is, a display blend ratio is $\alpha_x$.

Fig. 11 is a block diagram of the structure of the display control unit 54. The display control unit 54 includes a third multiplier 71, a third subtracter 72, a fourth multiplier 73, and a second adder 74. The calculation of expression (16) is performed according to calculation by the third multiplier 71 and the second adder 74. Note that $C_s$ equals $C_s$, $\alpha_s$ equals $\alpha_s$, and $C_d$ equals $C_D$.

The third multiplier 71 multiplies the color code $C_d$ of the image rendered in the second frame buffer 52 by the blend ratio $\alpha_s$ of the image rendered in the first frame buffer 51. The third subtracter 72 subtracts a result of the calculation of the third multiplier 71 from the color code $C_s$ of the image rendered in the first frame buffer 51.

The fourth multiplier 73 multiplies a result of the calculation of the third subtracter 72 by the blend ratio $\alpha_s$ of the image rendered in the first frame buffer 51. The second adder 74 adds the result of the calculation of the third multiplier 71 to a result of the calculation of the fourth multiplier 73. An output $C_{sd}$ of the second adder 74 is displayed on the display device 55. The result $C_{sd}$ of the calculation of the second adder 74 is represented by the following expression (19).

$$C_{sd} = \alpha_x C_s + (1 - \alpha_x)\, \alpha_s C_d$$

$$= \alpha_x (C_s - \alpha_s C_d) + \alpha_s C_d \qquad\qquad \dots (19)$$

Next, an operation of the display control apparatus 50 in the fourth embodiment will be explained. First, the first frame buffer 51 is cleared with $C=0$ and $\alpha=1.0$ in advance. The rendering unit 53 applies rendering to the first frame buffer 51 (the transparent screen). The display control unit 54 reads out data stored in the first frame buffer 51 and data stored the second frame buffer 52 (the background screen) and subjects the data to blend processing at the display transmittance $\alpha_x$. Then, the display control unit 54 displays a result obtained by subjecting pixel data in the first frame buffer 51 and pixel data in the second frame buffer 52 to the bland processing at the transmittance $\alpha_x$.

Note that, in the fourth embodiment, as in the third embodiment, a not-shown processing device executes the program of the flowchart shown in Fig. 10, whereby it is possible to realize the function of the rendering unit 53. An explanation of the flowchart shown in Fig. 10 is omitted because the explanation is redundant.

In the fourth embodiment, the rendering unit 53 subjects a rendering result already stored in the first frame buffer 51 and a rendering result of rendering to be applied to the first frame buffer 51 to blend processing. The display control unit 54 subjects the rendering result stored in the first frame buffer 51 and a rendering result stored in the second frame buffer 52 to the blend processing and synthesizes the rendering results. Thus, according to the fourth embodiment, even when alpha blending in display processing is performed together with alpha blending in rendering processing, it is possible to obtain a display result, in which the respective processing are synthesized, correctly.

(Fifth embodiment)

Fig. 12 is a block diagram of a schematic structure of a display control apparatus in a fifth embodiment. As shown in Fig. 12, a display control apparatus 70 in the fifth embodiment includes a first frame buffer 51 that stores data of a transparent screen, a second frame buffer 52 that stores data of a background screen, a rendering unit (a first rendering unit) 53 that applies rendering to the first frame buffer 51, a second rendering unit 71 that subjects pixels of the first frame buffer 51 and pixels of the second frame buffer 52 to blend processing, a third frame buffer 72 that stores a result of the blend processing of the second rendering unit 71, and a display control unit 73 that displays data stored in the third frame buffer 72 on a display device 55 like a display.

In the following description, only components of the display control apparatus 70 in the fifth embodiment different from those of the display control apparatus 50 in the third embodiment will be explained. Components same as those in the third embodiment are denoted by the identical reference numerals and signs and explanations of the components are omitted. The second rendering unit 71 has the same blending function as the display control unit 54 in the third embodiment. In other words, the second rendering unit 71 has the structure shown in Fig. 9. In the fifth embodiment, the display control unit 73 does not have the blending function.

Next, an operation of the display control apparatus 70 in the fifth embodiment will be explained. First, the first frame buffer 51 is cleared with C=0 and $\alpha$=1.0 in advance. The rendering unit 53 applies rendering to the first frame buffer 51 (the transparent screen). The second rendering unit 71 reads out data stored in the first frame buffer 51 and data stored in the second frame buffer 52 (the background screen) and confirms a transmission/non-transmission control flag provided for each pixel.

The second rendering unit 71 stores the data, which is stored in the second frame buffer 52, in the third frame buffer 72 for pixels with the transmission/non-transmission control flag set OFF. In addition, for pixels with the transmission/non-transmission control flag set ON, the second rendering unit 71 stores a result, which is obtained by subjecting pixel data in the first frame buffer 51 and pixel data in the second frame buffer 52 to blend processing, in the third frame buffer 72. The display control unit 73 reads out the data in the third frame buffer 72 and displays contents of the data on the display device 55 such as a display.

Note that it is also possible to use software to realize the operation of the display control apparatus 70 in the fifth embodiment. In this case, a not-shown processing device executes a program of a flowchart shown in Fig. 13, whereby the functions of the first rendering unit 53 and the second rendering unit 71 are realized.

The flow chart shown in Fig. 13 will be explained. First, after clearing the first frame buffer 51, the processing device reads out a color code $C_f$ and a blend ratio $\alpha_f$ from the first frame buffer 51 (step S1301). The processing device calculates $C_f{}'$ represented by expression (17) (step S1302). In addition, the processing device calculates $\alpha_f{}'$ represented by expression (18) (step S1303).

Subsequently, the processing device writes $C_f{}'$ and $\alpha_f{}'$ obtained from expressions (17) and (18) in the first frame buffer 51 (step S1304). The processing device repeats the processing until the processing is finished for all the pixels (step S1305). In the processing, $C_f{}'$ and $\alpha_f{}'$ written in the first frame buffer 51 anew are read out as the color code $C_f$ and the blend ratio $\alpha_f$ of the first frame buffer 51.

When the processing for writing $C_f{}'$ and $\alpha_f{}'$ in the first frame buffer 51 is finished ("Yes" at step S1305), the processing device reads out a color code $C_s$ and a blend ratio $\alpha_s$ of a transparent screen from the first frame buffer 51 (step S1306). In addition, the processing device reads out a color code $C_d$ of a background screen from the second frame buffer 52 (step S1307). Subsequently, the processing device performs an calculation of the next expression (20) to calculate $C_{sd}$ (step S1308).

$$C_{sd}=\alpha_s C_s+(1-\alpha_s)C_d \tag{20}$$

If the transmission/non-transmission control flag is set to non-transmission ("No" at step S1309), the processing device writes $C_{sd}$ in the third frame buffer 72 (step S1310). On the other hand, if the transmission/non-transmission control flag is set to transmission ("Yes" at step S1309), the processing device does not write $C_{sd}$ in the third frame buffer 72. The processing device repeats steps S1306 to S1311 until the processing is finished for all the pixels (step S1311).

In the fifth embodiment, the first rendering unit 53 subjects a rendering result already stored in the first frame buffer 51 and a rendering result of rendering to be applied to the first frame buffer 51 to blend processing. The second rendering unit 71 subjects the rendering result stored in the first frame buffer 51 and a rendering result stored in the second frame buffer 52 to transmission or non-transmission processing by a unit of pixel and synthesizes the rendering results. Thus, according to the fifth embodiment, even when display transmission/non-transmission processing is performed together with alpha blending in rendering processing, it is possible to obtain a display result, in which the respective processing are synthesized, correctly.

(Sixth embodiment)

In a sixth embodiment, the alpha blending in rendering processing and the alpha blending in display processing same as those in the fourth embodiment are performed by the same structure as the display control apparatus 70 in the fifth embodiment shown in Fig. 12. Since the overall structure is as shown in Fig. 12, redundant explanations are omitted. In the sixth embodiment, the second rendering unit 71 has the same blending function as the display control unit 54 in the third embodiment. In other words, the second rendering unit 71 has the structure shown in Fig. 11. In addition, the display control unit 73 does not have the blending function.

Next, an operation of the display control apparatus 70 in the sixth embodiment will be explained. First, the first frame buffer 51 is cleared with C=0 and $\alpha$=1.0 in advance. The first rendering unit 53 applies rendering to the first frame buffer 51 (the transparent screen). The second rendering unit 71 reads out data stored in the first frame buffer 51 and the second frame buffer 52 (the background screen) and applies blend processing to the data at a display transmittance $\alpha_x$.

The second rendering unit 71 stores a result, which is obtained by subjecting pixel data in the first frame buffer 51 and pixel data in the second frame buffer 52 to the blend processing at the display transmittance $\alpha_x$, in the third frame buffer 72. The display control unit 73 reads out data in the third frame buffer 72 and displays contents of the data on the display device 55 such as a display.

Note that it is also possible to use software to realize the operation of the display control apparatus 70 in the sixth embodiment. In this case, a not-shown processing device executes a program of a flowchart shown in Fig. 14, whereby the functions of the first rendering unit 53 and the second rendering unit 71 are realized.

The flowchart shown in Fig. 14 will be explained. First, after clearing the first frame buffer 51, the processing device reads out a color code $C_f$ and a blend ratio $\alpha_f$ from the first frame buffer 51 (step S1401). The processing device calculates $C_f'$ represented by expression (17) (step S1402). In addition, the processing device calculates $\alpha_f'$ represented by expression (18) (step S1403).

Subsequently, the processing device writes $C_f'$ and $\alpha_f'$ obtained from expressions (17) and (18) in the first frame buffer 51 (step S1404). The processing device repeats the processing until the processing is finished for all the pixels (step S1405). In the processing, $C_f'$ and $\alpha_f'$ written in the first frame buffer 51 anew are read out as the color code $C_f$ and the blend ratio $\alpha_f$ of the first frame buffer 51.

When the processing for writing $C_f'$ and $\alpha_f'$ in the first frame buffer 51 is finished ("Yes" at step S1405), the processing device reads out a color code $C_s$ and a blend ratio $\alpha_s$ of a transparent screen from the first frame buffer 51 (step S1406). In addition, the processing device reads out a color code $C_d$ of a background screen from the second frame buffer 52 (step S1407). Subsequently, the processing device performs an calculation of expression (19) to calculate $C_{sd}$ (step S1408).

Then, the processing device writes $C_{sd}$ in the third frame buffer 72 (step S1409). The processing device repeats steps S1406 to S1410 until the processing is finished for all the pixels (step S1410).

In the sixth embodiment, the first rendering unit 53 subjects a rendering result already stored in the first frame buffer 51 and a rendering result of rendering to be applied to the first frame buffer 51 to blend processing. The second rendering unit 71 subjects the rendering result stored in the first frame buffer 51 and a rendering result stored in the second frame buffer 52 to the blend processing and synthesizes the rendering results. Thus, according to the sixth embodiment, even when alpha blending in display processing is performed together with alpha blending in rendering processing, it is possible to obtain a display result, in which the respective processing are synthesized, correctly.

In the above description, the invention is not limited to the embodiments but can be changed in various ways.

According to the invention, it is possible to obtain a rendering apparatus that is capable of performing high-speed rendering and performing alpha blending normally. It is also possible to obtain a display control apparatus that is, even when display transmission/non-transmission processing or alpha blending in display processing is performed together with alpha blending in rendering processing, capable of obtaining a display result, in which the respective processings are synthesized, correctly.

INDUSTRIAL APPLICABILITY

As described above, the invention is suitable for rendering a rendering result, which is subjected to alpha blending, normally and at high speed without causing mismatching.

**Claims**

1. A rendering apparatus comprising:

   a frame buffer that stores a rendering result;
   a temporary memory that is higher in speed and smaller in a storage capacity than the frame buffer;
   a temporary memory rendering unit that subjects a rendering result already stored in the temporary memory and a rendering result of rendering to be applied to the temporary memory to blend processing and stores a result of the blend processing in the temporary memory; and
   a frame buffer rendering unit that subjects the rendering result already stored in the frame buffer and the rendering result stored in the temporary memory to blend processing and stores a result of the blend processing in the frame buffer.

2. The rendering apparatus according to claim 1, wherein
   the rendering apparatus has a plurality of sets of the temporary memory and the temporary memory rendering unit, and
   the frame buffer rendering unit subjects the rendering result already stored in the frame buffer and rendering results stored in the temporary memories to the blend processing and stores a result of the blend processing in the frame buffer.

3. The rendering apparatus according to claim 1, further comprising a selecting unit that selects an object of processing of the temporary memory rendering unit and the frame buffer rendering unit out of the temporary memories, wherein
   the rendering apparatus has a plurality of the temporary memories.

4. The rendering apparatus according to claim 1, wherein the temporary memory rendering unit includes:

   a first subtracter that subtracts a color code $C_t$ of an image already rendered in the temporary memory from a color code C of an image to be rendered in the temporary memory;
   a first multiplier that multiplies a result of the calculation of the first subtracter by a blend ratio $\alpha$ of the image to be rendered in the temporary memory;
   an adder that adds the color code C of the image to be rendered in the temporary memory to a result of the calculation of the first multiplier and sets a result of the addition as a new color code of the image already rendered in the temporary memory;
   a second subtracter that subtracts the blend ratio $\alpha$ of the image to be rendered in the temporary memory from 1; and
   a second multiplier that multiplies a result of the calculation of the second subtracter by a blend ratio $\alpha_t$ of the image already rendered in the temporary memory and sets a result of the multiplication as a new blend ratio of the image already rendered in the temporary memory.

5. The rendering apparatus according to claim 4, wherein the frame buffer rendering unit includes:

   a third multiplier that multiplies a color code $C_f$ of an image rendered in the frame buffer by the blend ratio $\alpha_t$ of the image already rendered in the temporary memory; and
   a second adder that adds the color code $C_t$ of the image rendered in the temporary memory to a result of the calculation of the third multiplier and sets a result of the addition as a new color code of the image rendered in the frame buffer.

6. A display control apparatus comprising:

   a frame buffer that stores a rendering result;
   a rendering unit that subjects a rendering result already stored in the frame buffer and a rendering result of rendering to be applied to the frame buffer to blend processing and stores a result of the blend processing in the frame buffer; and
   a display control unit that subjects transmission or non-transmission processing to a plurality of rendering results already stored in the frame buffer by a unit of pixel and synthesizes the rendering results.

7. The display control apparatus according to claim 6, wherein the rendering unit includes:

a first subtracter that subtracts a color code $C_f$ of an image already rendered in the frame buffer from a color code C of an image to be rendered in the frame buffer;

a first multiplier that multiplies a result of the calculation of the first subtracter by a blend ratio $\alpha$ of the image to be rendered in the frame buffer;

an adder that adds the color code C of the image to be rendered in the frame buffer to a result of the calculation of the first multiplier and sets a result of the addition as a new color code of the image already rendered in the temporary memory;

a second subtracter that subtracts the blend ratio $\alpha$ of the image to be rendered in the frame buffer from 1; and

a second multiplier that multiplies a result of the calculation of the second subtracter by a blend ratio $\alpha_f$ of the image already rendered in the frame buffer and sets a result of the multiplication as a new blend ratio of the image already rendered in the frame buffer.

**8.** The display control apparatus according to claim 7, wherein the display control unit includes:

a third multiplier that multiplies a color code $C_d$ of an image rendered in a background screen by the blend ratio $\alpha_s$ of the image already rendered in a transparent screen; and

a second adder that adds the color code $C_s$ of the image rendered in the transparent screen to a result of the calculation of the third multiplier and sets a result of the addition as a result of synthesis.

**9.** A display control apparatus comprising:

a frame buffer that stores a rendering result;

a rendering unit that subjects a rendering result already stored in the frame buffer and a rendering result of rendering to be applied to the frame buffer and stores a result of the blend processing in the frame buffer; and

a display control unit that subjects blend processing to a plurality of rendering results already stored in the frame buffer and synthesizes the rendering results.

**10.** The display control apparatus according to claim 9, wherein the rendering unit includes:

a first subtracter that subtracts a color code $C_f$ of an image already rendered in the frame buffer from a color code C of an image to be rendered in the frame buffer;

a first multiplier that multiplies a result of the calculation of the first subtracter by a blend ratio $\alpha$ of the image to be rendered in the frame buffer;

an adder that adds the color code C of the image to be rendered in the frame buffer to a result of the calculation of the first multiplier and sets a result of the addition as a new color code of the image already rendered in the temporary memory;

a second subtracter that subtracts the blend ratio $\alpha$ of the image to be rendered in the frame buffer from 1; and

a second multiplier that multiplies a result of the calculation of the second subtracter by a blend ratio $\alpha_f$ of the image already rendered in the frame buffer and sets a result of the multiplication as a new blend ratio of the image already rendered in the frame buffer.

**11.** The display control apparatus according to claim 10, wherein the display control unit includes:

a third multiplier that multiplies a color code $C_d$ of an image rendered in a background screen by a blend ratio $\alpha_s$ of an image rendered in a transparent screen;

a third subtracter that subtracts a result of the calculation of the third multiplier from a color code $C_s$ of the image rendered in the transparent screen;

a fourth multiplier that multiplies a result of the calculation of the third subtracter by a display transmittance $\alpha_x$ of the transparent screen and the background screen; and

a second adder that adds a result of the calculation of the fourth multiplier and the result of the calculation of the third multiplier and sets a result of the addition as a result of the synthesis.

**12.** A rendering apparatus comprising:

a frame buffer that stores a rendering result;

a temporary memory that is higher in speed and smaller in a storage capacity than the frame buffer;

a program for causing a processing device to perform: a step of subjecting a rendering result already stored in the temporary memory and a rendering result of rendering to be applied to the temporary memory to blend processing and storing a result of the blend processing in the temporary memory; and a step of subjecting the rendering result already stored in the frame buffer and the rendering result stored in the temporary memory to blend processing and storing a result of the blend processing in the frame buffer; and
the processing device that executes the program.

**13.** A rendering apparatus comprising:

a frame buffer that stores a rendering result;
a first temporary memory and a second temporary memory that is higher in speed and smaller in a storage capacity than the frame buffer;
a program for causing a processing device to perform: a first step of allocating a rendering area to the first temporary memory and applying rendering to the first temporary memory as long as the rendering is within the allocated rendering area; a second step of performing blend processing between the first temporary memory and the frame buffer, allocating a rendering area, which is different from the rendering area allocated to the first temporary memory, to the second temporary memory while writing a result of the blend processing in the frame buffer, and applying rendering to the second temporary memory as long as the rendering is within the allocated rendering area; a third step of performing blend processing between the second temporary memory and the frame buffer, allocating a rendering area, which is different from the rendering area allocated to the second temporary memory, to the first temporary memory while writing a result of the blend processing in the frame buffer, and applying rendering to the first temporary memory as long as the rendering is within the allocated rendering area; and alternate repetition of the second step and the third step; and
the processing device that executes the program.

**14.** A rendering apparatus comprising:

a frame buffer that stores a rendering result;
a first temporary memory and a second temporary memory that is higher in speed and smaller in a storage capacity than the frame buffer;
a program for causing a processing device to perform: a first step of allocating a rendering area to the first temporary memory and applying rendering to the first temporary memory as long as the rendering is within the allocated rendering area; a second step of allocating a rendering area, which is different from the rendering area allocated to the first temporary memory, to the second temporary memory, and applying rendering to the second temporary memory as long as the rendering is within the allocated rendering area; a third step of performing blend processing between the first temporary memory and the frame buffer; a fourth step of allocating a rendering area, which is different from the rendering area allocated to the second temporary memory, to the first temporary memory, and applying rendering to the first temporary memory as long as the rendering is within the allocated rendering area; a fifth step of performing blend processing between the second temporary memory and the frame buffer and writing a result of the blend processing in the frame buffer; and repetition of the second step to the fifth step; and
the processing device that executes the program.

**15.** A display control apparatus comprising:

a frame buffer that stores a rendering result;
a program for causing a processing device to subject a rendering result already stored in the frame buffer and a rendering result of rendering to be applied to the frame buffer to blend processing;
the processing device that execute the program and stores in the frame buffer a result of the blend processing of the rendering result already stored in the frame buffer and the rendering result of rendering to be applied to the frame buffer; and
a display control unit that subjects transmission or non-transmission processing to a plurality of rendering results already stored in the frame buffer by a unit of pixel and synthesizes the rendering results.

**16.** A display control apparatus comprising:

a frame buffer that stores a rendering result;
a program for causing a processing device to subject a rendering result already stored in the frame buffer and a rendering result of rendering to be applied to the frame buffer to blend processing;
the processing device that execute the program and stores in the frame buffer a result of the blend processing of the rendering result already stored in the frame buffer and the rendering result of rendering to be applied to the frame buffer; and

a display control unit that subjects blend processing to a plurality of rendering results already stored in the frame buffer and synthesizes the rendering results.

**17.** A display control apparatus comprising:

a first frame buffer that stores a rendering result;

a second frame buffer that stores a rendering result;

a first rendering unit that subjects a rendering result already stored in the first frame buffer and a rendering result of rendering to be applied to the first frame buffer to blend processing and stores a result of the blend processing in the fist frame buffer;

a second rendering unit that subjects transmission or non-transmission processing to a plurality of rendering results already stored in the first frame buffer by a unit of pixel, synthesizes the rendering results, and stores a result of synthesize in the second frame buffer; and

a display control unit that displays a rendering result in the second frame buffer.

**18.** A display control apparatus comprising:

a first frame buffer that stores a rendering result;

a second frame buffer that stores a rendering result;

a first rendering unit that subjects a rendering result already stored in the first frame buffer and a rendering result of rendering to be applied to the first frame buffer to blend processing and stores a result of the blend processing in the fist frame buffer;

a second rendering unit that subjects blend processing to a plurality of rendering results already stored in the first frame buffer, synthesizes the rendering results, and stores a result of synthesize in the second frame buffer; and

a display control unit that displays a rendering result in the second frame buffer.

**19.** A display control apparatus comprising:

a first frame buffer that stores a rendering result;

a second frame buffer that stores a rendering result;

a program that causes a processing device to perform: a step of subjecting a rendering result already stored in the first frame buffer and a rendering result of rendering to be applied to the first frame buffer to blend processing; a step of subjecting transmission or non-transmission processing to a plurality of rendering results already stored in the first frame buffer by a unit of pixel, and synthesizing the rendering results; a step of displaying the rendering result stored in the second frame buffer; and

the processing device that executes the program and stores in the fist frame buffer a result of the blend processing of the rendering result already stored in the first frame buffer and the rendering result of rendering to be applied to the first frame buffer, and stores in the second frame buffer a result of the synthesis by the transmission or non-transmission processing to the rendering results already stored in the first frame buffer by a unit of pixel.

**20.** A display control apparatus comprising:

a first frame buffer that stores a rendering result;

a second frame buffer that stores a rendering result;

a program that causes a processing device to perform: a step of subjecting a rendering result already stored in the first frame buffer and a rendering result of rendering to be applied to the first frame buffer to blend processing; a step of subjecting blend processing to a plurality of rendering results already stored in the first frame buffer by a unit of pixel, and synthesizing the rendering results; a step of displaying the rendering result stored in the second frame buffer; and

the processing device that executes the program and stores in the fist frame buffer a result of the blend processing of the rendering result already stored in the first frame buffer and the rendering result of rendering to be applied to the first frame buffer, and stores in the second frame buffer a result of the synthesis by the blend processing to the rendering results already stored in the first frame buffer by a unit of pixel.

# FIG.1

20

```
RENDERING
INSTRUCTION
```

25

```
DISTRIBUTING UNIT
```

23

```
FIRST TEMPORARY MEMORY
RENDERING UNIT
```

24

```
SECOND TEMPORARY MEMORY
RENDERING UNIT
```

26

```
FIRST TEMPORARY MEMORY
```

$(C_{1T}, \alpha_{1T})$

27

```
SECOND TEMPORARY MEMORY
```

$(C_{2T}, \alpha_{2T})$

22

```
FRAME BUFFER RENDERING UNIT
```
$$C_{1F} = C_{1T} + \alpha_{1T} C_F$$
$$C_{2F} = C_{2T} + \alpha_{2T} C_{1F}$$

21

```
FRAME BUFFER
```

# FIG.2

23(24)

# FIG.3

EP 1 583 072 A1

# FIG.4

PROGRAM 1

S401
ALLOCATE AREA TO TEMPORARY MEMORY 1

S402
WITHIN AREA? — No

Yes

S403
RENDERING

S404
INFORM PROGRAM 2

PROGRAM 2

S406
ALLOCATE AREA TO TEMPORARY MEMORY 2

S405
BLEND TEMPORARY MEMORY 1 AND FRAME BUFFER AND WRITE BLEND RESULT

S407
WITHIN AREA? — No

S409
INFORM PROGRAM 1

Yes

S408
RENDERING

S410
BLEND TEMPORARY MEMORY 2 AND FRAME BUFFER AND WRITE BLEND RESULT

# FIG.5

40

RENDERING
INSTRUCTION

43

TEMPORARY MEMORY RENDERING UNIT

44

FIRST SELECTING UNIT

26

FIRST TEMPORARY MEMORY

$(C_{1T}, \alpha_{1T})$

27

SECOND TEMPORARY MEMORY

$(C_{2T}, \alpha_{2T})$

45

SECOND SELECTING UNIT

22

FRAME BUFFER RENDERING UNIT
$C_{1F} = C_{1T} + \alpha_{1T} C_F$
$C_{2F} = C_{2T} + \alpha_{2T} C_{1F}$

21

FRAME BUFFER

# FIG.6

```
        ( PROGRAM 1 )
              │
              │ ┌─ S601
              ▼
    ┌─────────────────────┐
    │  ALLOCATE AREA TO    │
    │ TEMPORARY MEMORY 1   │
    └─────────────────────┘
              │
              ▼           ┌─ S602
           ╱WITHIN╲    No
          ╱ AREA?  ╲──────────────────┐
          ╲        ╱                  │
           ╲      ╱         ┌─ S604   │        ( PROGRAM 2 )
            Yes  ┌─ S603     ▼         │              │
    ┌─────────────────┐  ┌──────────┐ │              ▼
    │    RENDERING    │  │ INFORM   │─┼───────────┐  │
    └─────────────────┘  │PROGRAM 2 │ │           ▼  ▼        ┌─ S609
              │          └──────────┘ │    ┌──────────────────┐
              │                       │    │ BLEND TEMPORARY  │
              ▼           ┌─ S605     │    │ MEMORY 1 AND FRAME│
    ┌─────────────────────┐          │    │ BUFFER AND WRITE │
    │  ALLOCATE AREA TO    │          │    │  BLEND RESULT    │
    │ TEMPORARY MEMORY 2   │          │    └──────────────────┘
    └─────────────────────┘          │           │
              │                       │           │
              ▼           ┌─ S606     │ ┌─ S608    │
           ╱WITHIN╲    No  ┌──────────┐│           │
          ╱ AREA?  ╲──────│ INFORM   │┼───────────┤
          ╲        ╱      │PROGRAM 2 ││           ▼        ┌─ S610
           ╲      ╱       └──────────┘│    ┌──────────────────┐
            Yes  ┌─ S607              │    │ BLEND TEMPORARY  │
    ┌─────────────────┐               │    │ MEMORY 2 AND FRAME│
    │    RENDERING    │               │    │ BUFFER AND WRITE │
    └─────────────────┘               │    │  BLEND RESULT    │
              │                       │    └──────────────────┘
              └───────────────────────┘
```

# FIG.7

50

53
RENDERING
UNIT

51
FIRST
FRAME
BUFFER

52
SECOND
FRAME
BUFFER

54
DISPLAY
CONTROL
UNIT

55
DISPLAY

# FIG.8

# FIG.9

# FIG.10

START

↓

S1001

READ OUT $C_f$ AND $\alpha_f$ FROM FIRST FRAME BUFFER

↓

S1002

CALCULATE $\alpha C + (1-\alpha)C_f$ AS $C_f'$

↓

S1003

CALCULATE $\alpha_f(1-\alpha)$ AS $\alpha_f'$

↓

S1004

WRITE $C_f'$ AND $\alpha_f'$ IN FIRST FRAME BUFFER

↓

S1005

ALL PIXELS HAVE BEEN PROCESSED ? — No

Yes

↓

END

# FIG.11

# FIG.12

# FIG.13

START

READ OUT $C_f$ AND $\alpha_f$ FROM FIRST FRAME BUFFER — S1301

CALCULATE $\alpha C + (1-\alpha)C_f$ AS $C_f{}'$ — S1302

CALCULATE $\alpha_f(1-\alpha)$ AS $\alpha_f{}'$ — S1303

WRITE $C_f{}'$ AND $\alpha_f{}'$ IN FIRST FRAME BUFFER — S1304

ALL PIXELS HAVE BEEN PROCESSED ? — S1305
No
Yes

READ OUT $C_s$ AND $\alpha_s$ FROM FIRST FRAME BUFFER — S1306

READ OUT $C_d$ FROM SECOND FRAME BUFFER — S1307

CALCULATE $\alpha_s C_s + (1-\alpha_s)C_d$ AS $C_{sd}$ — S1308

TRANSMISSION/NON-TRANSMISSION FLAG IS SET TO TRANSMISSION ? — S1309
Yes
No

WRITE $C_{sd}$ IN FRAME BUFFER 3 — S1310

ALL PIXELS HAVE BEEN PROCESSED ? — S1311
No
Yes

END

# FIG.14

START

READ OUT $C_f$ AND $\alpha_f$ FROM FIRST FRAME BUFFER — S1401

CALCULATE $\alpha C + (1-\alpha)C_f$ AS $C_f{}'$ — S1402

CALCULATE $\alpha_f(1-\alpha)$ AS $\alpha_f{}'$ — S1403

WRITE $C_f{}'$ AND $\alpha_f{}'$ IN FIRST FRAME BUFFER — S1404

ALL PIXELS HAVE BEEN PROCESSED ? — S1405 — No

Yes

READ OUT $C_s$ AND $\alpha_s$ FROM FIRST FRAME BUFFER — S1406

READ OUT $C_d$ FROM SECOND FRAME BUFFER — S1407

CALCULATE $\alpha_x C_s + (1-\alpha_x)\alpha_s C_d$ AS $C_{sd}$ — S1408

WRITE $C_{sd}$ IN FRAME BUFFER 3 — S1409

ALL PIXELS HAVE BEEN PROCESSED ? — S1410 — No

Yes

END

# FIG.15

```
                    ┌─────────────────┐
                    │   RENDERING     │
                    │  INSTRUCTION    │
                    └─────────────────┘
                     ╱               ╲
                    ╱                 ╲
         3         ╱                   ╲         4
   ┌──────────────────────┐    ┌──────────────────────┐
   │ FIRST RENDERING UNIT  │    │ SECOND RENDERING UNIT │
   └──────────────────────┘    └──────────────────────┘
            ╲                         ╱
             ╲                       ╱
              ╲                     ╱   5
           ┌──────────────────────────┐
           │     ARBITRATION UNIT      │
           └──────────────────────────┘
                        │              2
           ┌──────────────────────────┐
           │     TEMPORARY MEMORY      │
           └──────────────────────────┘
                        │              1
           ┌──────────────────────────┐
           │       FRAME BUFFER        │
           └──────────────────────────┘
```

# FIG.16

```
              ┌─────────────────┐
              │   RENDERING     │
              │  INSTRUCTION    │
              └─────────────────┘
                       │
                       ▼                         ⌐8
    ┌──────────────────────────────────────────────┐
    │     OVERLAP JUDGING/DISTRIBUTING UNIT         │
    └──────────────────────────────────────────────┘
         ╱                                  ╲
        ╱                                    ╲
       ⌐3                                    ⌐4
┌──────────────────────┐          ┌──────────────────────┐
│  FIRST RENDERING UNIT │          │ SECOND RENDERING UNIT │
└──────────────────────┘          └──────────────────────┘
       │           ⌐6                    │          ⌐7
┌──────────────────────┐          ┌──────────────────────┐
│ FIRST TEMPORARY MEMORY│          │SECOND TEMPORARY MEMORY│
└──────────────────────┘          └──────────────────────┘
        ╲                                    ╱
         ╲                                  ╱
          ╲              ⌐1               ╱
         ┌──────────────────────────────┐
         │        FRAME BUFFER           │
         └──────────────────────────────┘
```

# FIG.17

(a)SCREEN TO BE RENDERED
(=TRANSPARENT SCREEN)

12

11

(b) BACKGROUND SCREEN

13

14

(c) SCREEN AFTER DISPLAY
TRANSMISSION/NON-
TRANSMISSION PROCESSING

13

12

11

14

# FIG.18

(a)

(b)

# FIG.19

(a)SCREEN TO BE RENDERED
(=TRANSPARENT SCREEN)

15

16

17

11

12

(c) SCREEN AFTER DISPLAY
TRANSMISSION/NON-
TRANSMISSION PROCESSING

13

12

16

17

11

14

(b) BACKGROUND SCREEN

13

14

(d) ORIGINALLY INTENDED SCREEN

13

12

18

17

11

14

## INTERNATIONAL SEARCH REPORT

| International application No. |
| --- |
| PCT/JP03/04772 |

A. CLASSIFICATION OF SUBJECT MATTER
    Int.Cl⁷ G09G5/00, G06T11/00

According to International Patent Classification (IPC) or to both national classification and IPC

B. FIELDS SEARCHED

Minimum documentation searched (classification system followed by classification symbols)
    Int.Cl⁷ G09G5/00-5/42, G06T11/00

Documentation searched other than minimum documentation to the extent that such documents are included in the fields searched
    Jitsuyo Shinan Koho          1926-1996    Toroku Jitsuyo Shinan Koho    1994-2003
    Kokai Jitsuyo Shinan Koho    1971-2003    Jitsuyo Shinan Toroku Koho    1996-2003

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 2003-6665 A  (Hitachi, Ltd.),<br>10 January, 2003 (10.01.03),<br>Claim 1; Par. Nos. [0031], [0032]; Fig. 1<br>(Family: none) | 6,9,15-20<br>1-5,7,8,<br>10-14 |
| Y | JP 2002-33904 A  (Hitachi, Ltd.),<br>31 January, 2002 (31.01.02),<br>Par. Nos. [0003] to [0009], [0011], [0012];<br>Figs. 7, 10<br>(Family: none) | 6,9,15,16 |
| Y | JP 11-272846 A  (Mitsubishi Electric Corp.),<br>08 October, 1999 (08.10.99),<br>Par. Nos. [0009] to [0012]; Fig. 1<br>(Family: none) | 6,9,15,16 |

| ☒ | Further documents are listed in the continuation of Box C. | ☐ | See patent family annex. |
| --- | --- | --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 23 May, 2003 (23.05.03) | 03 June, 2003 (03.06.03), |

| Name and mailing address of the ISA/<br>    Japanese Patent Office | Authorized officer |
| --- | --- |
| Facsimile No. | Telephone No. |

Form PCT/ISA/210 (second sheet) (July 1998)

<table>
<tr><td colspan="2" style="text-align:center"><b>INTERNATIONAL SEARCH REPORT</b></td><td>International application No.<br>PCT/JP03/04772</td></tr>
</table>

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | EP 952546 A2 (NEC CORP.),<br>27 October, 1999 (27.10.99),<br>Par. Nos. [0004] to [0006]; Fig. 1<br>& JP 11-283015 A      & US 6330002 B1<br>& KR 99/78196 A | 17-20 |
| A | JP 2001-167289 A (Sega Corp.),<br>22 June, 2001 (22.06.01),<br>Full text; Figs. 1 to 18<br>(Family: none) | 1-20 |

Form PCT/ISA/210 (continuation of second sheet) (July 1998)